# EUROPEAN PATENT APPLICATION

(11) **EP 4 322 583 A1**
(43) Date of publication of application: **14.02.2024**
(21) Application number: 22806819.3
(22) Date of filing: 12.05.2022
(51) Int. Cl.: H04W 12/37, H04W 76/14

(54) **METHOD FOR DETERMINING SECURITY PROTECTION ENABLING MODE, COMMUNICATION METHOD, AND COMMUNICATION APPARATUS**

(30) Priority: 13.05.2021 CN 202110524279
(71) Applicant: Huawei Technologies Co., Ltd., Shenzhen, Guangdong 518129 (CN)
(72) Inventor: LEI, Ao, Shenzhen, Guangdong 518129 (CN); WU, Yizhuang, Shenzhen, Guangdong 518129 (CN); LI, He, Shenzhen, Guangdong 518129 (CN)
(74) Representative: Pfenning, Meinig & Partner mbB
(86) International application number: PCT/CN2022/092338
(87) International publication number: WO 2022/237857

(57) **Abstract**

This application provides a method for determining a security protection enabling manner, a communication method, and a communication apparatus. The method may include: A first terminal device receives a first identifier from a core network element, where the first identifier is used to modify a security protection policy of a terminal device; in a process in which the first terminal device establishes a connection to a second terminal device for a service, the first terminal device determines, based on the first identifier, whether to enable security protection for the connection; and the first terminal device sends first information to the second terminal device, where the first information indicates whether to enable security protection for the connection. According to the foregoing method, the two terminal devices can successfully establish the connection.

## Description

This application claims priority to Chinese Patent Application No. 202110524279.3, filed with the China National Intellectual Property Administration on May 13, 2021 and entitled "METHOD FOR DETERMINING SECURITY PROTECTION ENABLING MANNER, COMMUNICATION METHOD, AND COMMUNICATION APPARATUS", which is incorporated herein by reference in its entirety.

### TECHNICAL FIELD

This application relates to the communication field, and more specifically, to a method for determining a security protection enabling manner, a communication method, and a communication apparatus.

### BACKGROUND

For a 5^{th} generation (5^{th} generation, 5G) proximity-based service (proximity-based service, ProSe), a policy control function (policy control function, PCF) sends security protection policies of the ProSe service at different geographical locations to a terminal device. In a ProSe procedure, a discovery procedure is used only to discover a peer terminal device. After the discovery procedure, a PCS unicast connection establishment procedure needs to be performed.

However, in the PCS unicast connection establishment procedure after the discovery procedure, if two terminal devices are located at different geographical locations, security protection policies used by the two terminal devices may not match. When the security protection policies of the two terminal devices do not match, a receiving end terminal device rejects to establish a unicast connection. As a result, the unicast connection fails to be established.

### SUMMARY

This application provides a method for determining a security protection enabling manner, so that two terminal devices can successfully establish a connection.

According to a first aspect, a method for determining a security protection enabling manner is provided. The method includes: A first terminal device receives a first identifier from a core network element, where the first identifier is used to modify a security protection policy of a terminal device; in a process in which the first terminal device establishes a connection to a second terminal device for a service, the first terminal device determines, based on the first identifier, whether to enable security protection for the connection; and the first terminal device sends first information to the second terminal device, where the first information indicates whether to enable security protection for the connection.

Based on the foregoing technical solution, in the process in which the first terminal device establishes the connection to the second terminal device for the service, the first terminal device may determine, based on the first identifier, whether to enable security protection for the connection for the service, instead of determining, according to security protection policies of the two terminal devices, whether to enable security protection for the connection. This can avoid a case in which whether to enable security protection for the connection cannot be successfully determined when the security protection policies of the two terminal devices do not match, and can further avoid a signaling waste caused by a connection establishment failure.

For example, the core network element is a policy control function network element, a direct communication discovery name management function network element, or the like.

For example, the first identifier is one or more of the following: a new security protection policy, a new security protection enabling manner, and first indication information, where the first indication information indicates that the security protection policy of the terminal device is allowed to be forcibly modified.

In a possible implementation, the first identifier is the first indication information, and that the first terminal device determines, based on the first identifier, whether to enable security protection for the connection includes: The first terminal device determines, based on the first indication information and according to a security protection policy with a higher security level in a first security protection policy and a second security protection policy, whether to enable security protection for the connection, where the first security protection policy is a security protection policy used by the first terminal device in the service, and the second security protection policy is a security protection policy used by the second terminal device in the service.

The second security protection policy is sent by the second terminal device to the first terminal device. For example, in the process of establishing the connection, the second terminal device sends a direct communication request message to the first terminal device, where the direct communication request message includes the second security protection policy. For another example, in the process of establishing the connection, the second terminal device sends a direct security mode command complete message to the first terminal device, where the direct security mode command complete message includes the second security protection policy.

In another possible implementation, the first identifier is the first indication information, and that the first terminal device determines, based on the first identifier, whether to enable security protection for the connection includes: The first terminal device determines, based on the first indication information and according to a first security protection policy, whether to enable security protection for the connection, where the first security protection policy is a security protection policy used by the first terminal device in the service.

Based on the foregoing technical solution, the first terminal device determines, based on the first indication information and according to the first security protection policy, whether to enable security protection for the connection, so that processing logic of the first terminal device is simpler, and processing efficiency of the first terminal device can be improved.

In another possible implementation, the first identifier is the new security protection policy, and that the first terminal device determines, based on the first identifier, whether to enable security protection for the connection includes: The first terminal device determines, according to the new security protection policy, whether to enable security protection for the connection.

Based on the foregoing technical solution, the first terminal device determines, based on the first indication information and according to the new security protection policy, whether to enable security protection for the connection, so that processing logic of the first terminal device is simpler, and processing efficiency of the first terminal device can be improved.

In another possible implementation, the first identifier is the new security protection enabling manner, and that the first terminal device determines, based on the first identifier, whether to enable security protection for the connection includes: The first terminal device determines, based on the new security protection enabling manner, whether to enable security protection for the connection.

Based on the foregoing technical solution, the first terminal device determines, based on the first indication information and the new security protection enabling manner, whether to enable security protection for the connection, so that processing logic of the first terminal device is simpler, and processing efficiency of the first terminal device can be improved.

With reference to the first aspect, in some implementations of the first aspect, that the first terminal device determines, based on the first identifier, whether to enable security protection for the connection includes: When the first security protection policy does not match the second security protection policy, the first terminal device determines, based on the first identifier, whether to enable security protection for the connection, where the first security protection policy is the security protection policy used by the first terminal device in the service, and the second security protection policy is the security protection policy used by the second terminal device in the service.

With reference to the first aspect, in some implementations of the first aspect, that the first terminal device determines, based on the first identifier, whether to enable security protection for the connection includes: When it is determined that the second terminal device supports forcible modification of the security protection policy, the first terminal device determines, based on the first identifier, whether to enable security protection for the connection.

Based on the foregoing technical solution, when it is determined that the second terminal device supports forcible modification of the security protection policy, the first terminal device determines, based on the first identifier, whether to enable security protection for the connection. This can avoid a connection establishment failure caused because the second terminal device does not support forcible modification of the security protection policy.

In a possible implementation, a method for determining that the second terminal device supports forcible modification of the security protection policy includes: The first terminal device receives service discovery code from the second terminal device in a discovery procedure of the service, where the service discovery code corresponds to the first identifier; and the first terminal device determines, based on the service discovery code, that the second terminal device supports forcible modification of the security protection policy.

In another possible implementation, a method for determining that the second terminal device supports forcible modification of the security protection policy includes: The first terminal device receives a first message from the second terminal device in a process of establishing the connection, where the first message includes the first identifier; and the first terminal device determines, based on the first identifier, that the second terminal device supports forcible modification of the security protection policy.

With reference to the first aspect, in some implementations of the first aspect, the core network element is a first direct communication discovery name management function network element, the first identifier corresponds to the service discovery code, and the method further includes: The first terminal device receives the service discovery code from the first direct communication discovery name management function network element.

The first direct communication discovery name management function network element provides a service for the first terminal device.

Based on the foregoing technical solution, the first identifier obtained by the first terminal device corresponds to the service discovery code, so that the first terminal device determines, based on the service discovery code, whether the second terminal device supports forcible modification of the security protection policy.

According to a second aspect, a method for determining a security protection enabling manner is provided. The method includes: A second terminal device receives a first identifier from a core network element, where the first identifier is used to modify a security protection policy of a terminal device; in a process in which the second terminal device establishes a connection to a first terminal device for a service, the second terminal device sends the first identifier to the first terminal device; the second terminal device receives first information from the first terminal device, where the first information indicates whether to enable security protection for the connection, and the first information is determined by the first terminal device based on the first identifier; and the second terminal device determines, based on the first information, whether to enable security protection for the connection.

Based on the foregoing technical solution, the second terminal device sends the first identifier to the first terminal device. This helps the first terminal device determine, based on the first identifier, that the second terminal device supports forcible modification of the security protection policy, so that the first terminal device can determine, based on the first identifier, whether to enable security protection for the connection.

According to a third aspect, a method for determining a security protection enabling manner is provided. The method includes: A second terminal device receives a first identifier from a core network element, where the first identifier is used to modify a security protection policy of a terminal device, and the first identifier corresponds to service discovery code; the second terminal device sends the service discovery code to a first terminal device in a discovery procedure of a service; in a process in which the second terminal device establishes a connection to the first terminal device for the service, the second terminal device receives first information from the first terminal device, where the first information indicates whether to enable security protection for the connection, and the first information is determined by the first terminal device based on the first identifier; and the second terminal device determines, based on the first information, whether to enable security protection for the connection.

Based on the foregoing technical solution, the second terminal device sends the service discovery code corresponding to the first identifier to the first terminal device. This helps the first terminal device determine, based on the service discovery code, that the second terminal device supports forcible modification of the security protection policy, so that the first terminal device may determine, based on the first identifier, whether to enable security protection for the connection.

For example, the core network element is a policy control function network element, a direct communication discovery name management function network element, or the like.

For example, the first identifier is one or more of the following: a new security protection policy, a new security protection enabling manner, and first indication information, where the first indication information indicates that the security protection policy of the terminal device is allowed to be forcibly modified.

With reference to the second aspect or the third aspect, in some implementations of the second aspect or the third aspect, the second terminal device does not check whether the security protection enabling manner for the connection matches a second security protection policy, where the second security protection policy is a security protection policy used by the second terminal device in the service.

Based on the foregoing technical solution, the second terminal device may not check whether the security protection enabling manner for the connection matches the security protection policy of the local end, so that processing resources of the second terminal device can be saved.

With reference to the second aspect or the third aspect, in some implementations of the second aspect or the third aspect, the first information further includes the first identifier.

Based on the foregoing technical solution, the second terminal device may determine, based on the first identifier included in the first information, that the security protection enabling manner for the connection is determined based on the first identifier.

According to a fourth aspect, a communication method is provided. The method includes: A first core network element determines a first identifier based on a security protection policy configuration of a first service and second indication information, where the second indication information indicates that a security protection policy of the first service is capable of being forcibly modified during connection establishment, and the first identifier is used to modify a security protection policy of a terminal device; and the first core network element sends the first identifier to the terminal device.

Based on the foregoing technical solution, after determining the first identifier based on the security protection policy configuration of the first service and the second indication information, the core network element sends the first identifier to the terminal device. This helps the terminal device modify the security protection policy based on the first identifier. This can avoid a connection establishment failure, of the first service, caused because security protection policies of terminal devices at two ends do not match.

For example, the first core network element is a policy control function network element, a direct communication discovery name management function network element, or the like.

With reference to the fourth aspect, in some implementations of the fourth aspect, that a first core network element determines a first identifier based on a security protection policy configuration of a first service and second indication information includes: When it is determined that values of a plurality of security protection policies included in the security protection policy configuration are different, the first core network element determines the first identifier based on the security protection policy configuration and the second indication information, where the plurality of security protection policies include security protection policies of the first service at different geographical locations.

Based on the foregoing technical solution, when it is determined that the values of the plurality of security protection policies included in the security protection policy configuration are different, the first core network element determines the first identifier, so that processing resources of the first core network element can be saved.

With reference to the fourth aspect, in some implementations of the fourth aspect, the method further includes: The first core network element receives the second indication information from a second core network element.

For example, the first core network element is a policy control function network element, and the second core network element is an application function network element; or the first core network element is a direct communication discovery name management function network element, and the second core network element is a policy control function network element.

With reference to the fourth aspect, in some implementations of the fourth aspect, the method further includes: The first core network element sends a first request message to the second core network element, where the first request message is used to request the second indication information.

With reference to the fourth aspect, in some implementations of the fourth aspect, that the first core network element sends a first request message to the second core network element includes: When it is determined that the values of the plurality of security protection policies included in the security protection policy configuration are different, the first core network element sends the first request message to the second core network element, where the plurality of security protection policies include the security protection policies of the first service at the different geographical locations.

With reference to the fourth aspect, in some implementations of the fourth aspect, the first core network element is a second direct communication discovery name management function network element, the terminal device is a second terminal device, and that the first core network element sends the first identifier to the terminal device includes: When it is determined that a first security protection policy does not match a second security protection policy, the second direct communication discovery name management function network element sends the first identifier to the second terminal device, where the first security protection policy is a security protection policy used by the first terminal device in the first service, the second security protection policy is a security protection policy used by the second terminal device in the first service, and the first terminal device is a terminal device that establishes a connection to the second terminal device for the first service.

The second direct communication discovery name management function network element provides a service for the second terminal device.

With reference to the fourth aspect, in some implementations of the fourth aspect, the method further includes: The second direct communication discovery name management network element receives the first security protection policy from a first direct communication discovery name management network element; and the second direct communication discovery name management network element determines that the first security protection policy does not match the second security protection policy.

The first direct communication discovery name management function network element provides a service for the first terminal device.

With reference to the fourth aspect, in some implementations of the fourth aspect, the method further includes: The second direct communication discovery name management network element sends the second security protection policy to a first direct communication discovery name management network element; and the second direct communication discovery name management network element receives third indication information from the first direct communication discovery name management network element, where the third indication information indicates that the first security protection policy does not match the second security protection policy.

With reference to the fourth aspect, in some implementations of the fourth aspect, the method further includes: The second direct communication discovery name management function network element determines the second security protection policy based on location information of the second terminal device.

With reference to the fourth aspect, in some implementations of the fourth aspect, the method further includes: The second direct communication discovery name management function network element receives the location information from the second terminal device.

With reference to the fourth aspect, in some implementations of the fourth aspect, the method further includes: The second direct communication discovery name management function network element triggers a gateway mobile location center to obtain the location information by using a location service.

With reference to the fourth aspect, in some implementations of the fourth aspect, the method further includes: The second direct communication discovery name management function network element requests the location information of the second terminal device from an access and mobility management function network element serving the second terminal device.

With reference to the fourth aspect, in some implementations of the fourth aspect, the first core network element is a first direct communication discovery name management function network element, the terminal device is a first terminal device, and that the first core network element sends the first identifier to the terminal device includes: When it is determined that a first security protection policy does not match a second security protection policy, the first direct communication discovery name management function network element sends the first identifier to the first terminal device, where the first security protection policy is a security protection policy used by the first terminal device in the first service, the second security protection policy is a security protection policy used by the second terminal device in the first service, and the second terminal device is a terminal device that establishes a connection to the first terminal device for the first service.

With reference to the fourth aspect, in some implementations of the fourth aspect, the method further includes: The first direct communication discovery name management network element receives the second security protection policy from a second direct communication discovery name management network element; and the first direct communication discovery name management network element determines that the first security protection policy does not match the second security protection policy.

With reference to the fourth aspect, in some implementations of the fourth aspect, the method further includes: The first direct communication discovery name management network element sends the first security protection policy to a second direct communication discovery name management network element; and the first direct communication discovery name management network element receives third indication information from the second direct communication discovery name management network element, where the third indication information indicates that the first security protection policy does not match the second security protection policy.

With reference to the fourth aspect, in some implementations of the fourth aspect, the method further includes: The first direct communication discovery name management function network element determines the first security protection policy based on location information of the first terminal device.

With reference to the fourth aspect, in some implementations of the fourth aspect, the method further includes: The first direct communication discovery name management function network element receives the location information from the first terminal device.

With reference to the fourth aspect, in some implementations of the fourth aspect, the method further includes: The first direct communication discovery name management function network element triggers a gateway mobile location center to obtain the location information by using a location service.

With reference to the fourth aspect, in some implementations of the fourth aspect, the method further includes: The first direct communication discovery name management function network element requests the location information of the first terminal device from an access and mobility management function network element serving the first terminal device.

With reference to the fourth aspect, in some implementations of the fourth aspect, the first core network element is the direct communication discovery name management function network element, and the first identifier is carried in a direct communication discovery message.

According to a fifth aspect, a communication method is provided. The method includes: An application function network element determines that values of a plurality of security protection policies included in a security protection policy configuration of a first service are different, where the plurality of security protection policies include security protection policies of the first service at different geographical locations; and the application function network element sends second indication information to a policy control function network element, where the second indication information indicates that the security protection policy of the first service is capable of being forcibly modified during connection establishment.

Based on the foregoing technical solution, the application function network element sends the second indication information to the policy control function network element, so that the policy control function network element determines the first identifier based on the second indication information.

With reference to the fifth aspect, in some implementations of the fifth aspect, the method further includes: The application function network element receives a first request message from the policy control function network element, where the first request message is used to request the second indication information; and that the application function network element sends second indication information to a policy control function network element includes: The application function network element sends the second indication information to the policy control function network element based on the first request message.

According to a sixth aspect, a communication method is provided. The method includes: A second direct communication discovery name management network element sends a second request message to a first direct communication discovery name management network element, where the second request message is used to request to obtain a first identifier, and the first identifier is used to modify a security protection policy of a terminal device; the second direct communication discovery name management network element receives a second message from the first direct communication discovery name management network element, where the second message includes the first identifier; and the second direct communication discovery name management network element sends the first identifier to a second terminal device.

The second direct communication discovery name management function network element provides a service for the second terminal device. The first direct communication discovery name management function network element provides a service for a first terminal device. The first terminal device is a terminal device that establishes a connection to the second terminal device.

Based on the foregoing technical solution, after obtaining the first identifier, the second direct communication discovery name management function network element sends the first identifier to the second terminal device. This helps the terminal device modify the security protection policy based on the first identifier. This can avoid a connection establishment failure, of the first service, caused because security protection policies of terminal devices at two ends do not match.

For example, the first identifier is one or more of the following: a new security protection policy, a new security protection enabling manner, and first indication information, where the first indication information indicates that the security protection policy of the terminal device is allowed to be forcibly modified.

With reference to the sixth aspect, in some implementations of the sixth aspect, the second request message includes a second security protection policy, the second message further includes service discovery code and/or third indication information, the third indication information indicates that a first security protection policy does not match the second security protection policy, and the service discovery code corresponds to the first identifier. The first security protection policy is a security protection policy used by the first terminal device in the service, the second security protection policy is a security protection policy used by the second terminal device in the service, and the first terminal device is a terminal device that establishes a connection to the second terminal device for the service.

With reference to the sixth aspect, in some implementations of the sixth aspect, that the second direct communication discovery name management network element sends the first identifier to a second terminal device includes: When it is determined that the first security protection policy does not match the second security protection policy, the second direct communication discovery name management function network element sends the first identifier to the second terminal device, where the first security protection policy is a security protection policy used by the first terminal device in the service, the second security protection policy is a security protection policy used by the second terminal device in the service, and the first terminal device is a terminal device that establishes a connection to the second terminal device for the service.

With reference to the sixth aspect, in some implementations of the sixth aspect, the method further includes: The second direct communication discovery name management network element receives the first security protection policy from the first direct communication discovery name management network element; and the second direct communication discovery name management network element determines that the first security protection policy does not match the second security protection policy.

With reference to the sixth aspect, in some implementations of the sixth aspect, the method further includes: The second direct communication discovery name management network element sends the second security protection policy to the first direct communication discovery name management network element; and the second direct communication discovery name management network element receives third indication information from the first direct communication discovery name management network element, where the third indication information indicates that the first security protection policy does not match the second security protection policy.

With reference to the sixth aspect, in some implementations of the sixth aspect, the method further includes: The first direct communication discovery name management function network element determines the first security protection policy based on location information of the first terminal device.

With reference to the sixth aspect, in some implementations of the sixth aspect, the method further includes: The first direct communication discovery name management function network element receives the location information from the first terminal device.

With reference to the sixth aspect, in some implementations of the sixth aspect, the method further includes: The first direct communication discovery name management function network element triggers a gateway mobile location center to obtain the location information by using a location service.

With reference to the sixth aspect, in some implementations of the sixth aspect, the method further includes: The first direct communication discovery name management function network element requests the location information of the first terminal device from an access and mobility management function network element serving the first terminal device.

With reference to the sixth aspect, in some implementations of the sixth aspect, the first identifier is carried in a direct communication discovery message.

According to a seventh aspect, a communication apparatus is provided. The communication apparatus includes a transceiver unit and a processing unit. The transceiver unit is configured to receive a first identifier from a core network element, where the first identifier is used to modify a security protection policy of a terminal device. In a process in which the communication apparatus establishes a connection to a second terminal device for a service, the processing unit is configured to determine, based on the first identifier, whether to enable security protection for the connection. The transceiver unit is further configured to send first information to the second terminal device, where the first information indicates whether to enable security protection for the connection.

For example, the core network element is a policy control function network element, a direct communication discovery name management function network element, or the like.

For example, the first identifier is one or more of the following: a new security protection policy, a new security protection enabling manner, and first indication information, where the first indication information indicates that the security protection policy of the terminal device is allowed to be forcibly modified.

In a possible implementation, the first identifier is the first indication information, and the processing unit is specifically configured to determine, based on the first indication information and according to a security protection policy with a higher security level in a first security protection policy and a second security protection policy, whether to enable security protection for the connection, where the first security protection policy is a security protection policy used by the communication apparatus in the service, and the second security protection policy is a security protection policy used by the second terminal device in the service.

In another possible implementation, the first identifier is the first indication information, and the processing unit is specifically configured to determine, based on the first indication information and according to a first security protection policy, whether to enable security protection for the connection, where the first security protection policy is a security protection policy used by the communication apparatus in the service.

In another possible implementation, the first identifier is the new security protection policy, and the processing unit is specifically configured to determine, according to the new security protection policy, whether to enable security protection for the connection.

In another possible implementation, the first identifier is the new security protection enabling manner, and the processing unit is specifically configured to determine, based on the new security protection enabling manner, whether to enable security protection for the connection.

With reference to the seventh aspect, in some implementations of the seventh aspect, the processing unit is specifically configured to: When the first security protection policy does not match the second security protection policy, determine, based on the first identifier, whether to enable security protection for the connection, where the first security protection policy is the security protection policy used by the communication apparatus in the service, and the second security protection policy is the security protection policy used by the second terminal device in the service.

With reference to the seventh aspect, in some implementations of the seventh aspect, the processing unit is specifically configured to: When it is determined that the second terminal device supports forcible modification of the security protection policy, determine, based on the first identifier, whether to enable security protection for the connection.

In a possible implementation, the transceiver unit is further configured to receive service discovery code from the second terminal device in a discovery procedure of the service, where the service discovery code corresponds to the first identifier. The processing unit is further configured to determine, based on the service discovery code, that the second terminal device supports forcible modification of the security protection policy.

In another possible implementation, the transceiver unit is further configured to receive a first message from the second terminal device in a process of establishing the connection, where the first message includes the first identifier. The processing unit is further configured to determine, based on the first identifier, that the second terminal device supports forcible modification of the security protection policy.

With reference to the seventh aspect, in some implementations of the seventh aspect, the core network element is a first direct communication discovery name management function network element, the first identifier corresponds to the service discovery code, and the transceiver unit is further configured to receive the service discovery code from the first direct communication discovery name management function network element.

According to an eighth aspect, a communication apparatus is provided. The communication apparatus includes a transceiver unit and a processing unit. The transceiver unit is configured to receive a first identifier from a core network element, where the first identifier is used to modify a security protection policy of a terminal device. In a process in which the communication apparatus establishes a connection to a first terminal device for a service, the transceiver unit is further configured to send the first identifier to the first terminal device. The transceiver unit is further configured to receive first information from the first terminal device, where the first information indicates whether to enable security protection for the connection, and the first information is determined by the first terminal device based on the first identifier. The processing unit is configured to determine, based on the first information, whether to enable security protection for the connection.

According to a ninth aspect, a communication apparatus is provided. The communication apparatus includes a transceiver unit and a processing unit. The transceiver unit is configured to receive a first identifier from a core network element, where the first identifier is used to modify a security protection policy of a terminal device, and the first identifier corresponds to service discovery code. The transceiver unit is further configured to send the service discovery code to a first terminal device in a discovery procedure of a service. In a process in which the communication apparatus establishes a connection to the first terminal device for the service, the transceiver unit is further configured to receive first information from the first terminal device, where the first information indicates whether to enable security protection for the connection, and the first information is determined by the first terminal device based on the first identifier. The processing unit is configured to determine, based on the first information, whether to enable security protection for the connection.

For example, the core network element is a policy control function network element, a direct communication discovery name management function network element, or the like.

For example, the first identifier is one or more of the following: a new security protection policy, a new security protection enabling manner, and first indication information, where the first indication information indicates that the security protection policy of the terminal device is allowed to be forcibly modified.

With reference to the eighth aspect or the ninth aspect, in some implementations of the eighth aspect or the ninth aspect, the communication apparatus does not check whether the security protection enabling manner for the connection matches a second security protection policy, where the second security protection policy is a security protection policy used by the second terminal device in the service.

With reference to the eighth aspect or the ninth aspect, in some implementations of the eighth aspect or the ninth aspect, the first information further includes the first identifier.

According to a tenth aspect, a communication apparatus is provided. The communication apparatus includes a transceiver unit and a processing unit. The processing unit is configured to determine a first identifier based on a security protection policy configuration of a first service and second indication information, where the second indication information indicates that a security protection policy of the first service is capable of being forcibly modified during connection establishment, and the first identifier is used to modify a security protection policy of a terminal device. The transceiver unit is configured to send the first identifier to the terminal device.

For example, the communication apparatus is a policy control function network element, a direct communication discovery name management function network element, or the like.

With reference to the tenth aspect, in some implementations of the tenth aspect, the processing unit is specifically configured to: When it is determined that values of a plurality of security protection policies included in the security protection policy configuration are different, determine the first identifier based on the security protection policy configuration and the second indication information, where the plurality of security protection policies include security protection policies of the first service at different geographical locations.

With reference to the tenth aspect, in some implementations of the tenth aspect, the transceiver unit is further configured to receive the second indication information from a second core network element.

For example, the communication apparatus is a policy control function network element, and the second core network element is an application function network element; or the communication apparatus is a direct communication discovery name management function network element, and the second core network element is a policy control function network element.

With reference to the tenth aspect, in some implementations of the tenth aspect, the transceiver unit is further configured to send a first request message to the second core network element, where the first request message is used to request the second indication information.

With reference to the tenth aspect, in some implementations of the tenth aspect, the transceiver unit is specifically configured to: When it is determined that the values of the plurality of security protection policies included in the security protection policy configuration are different, send the first request message to the second core network element, where the plurality of security protection policies include the security protection policies of the first service at the different geographical locations.

With reference to the tenth aspect, in some implementations of the tenth aspect, the communication apparatus is a second direct communication discovery name management function network element, the terminal device is a second terminal device, and the transceiver unit is specifically configured to: When it is determined that a first security protection policy does not match a second security protection policy, send the first identifier to the second terminal device, where the first security protection policy is a security protection policy used by the first terminal device in the first service, the second security protection policy is a security protection policy used by the second terminal device in the first service, and the first terminal device is a terminal device that establishes a connection to the second terminal device for the first service.

With reference to the tenth aspect, in some implementations of the tenth aspect, the transceiver unit is further configured to receive the first security protection policy from a first direct communication discovery name management network element. The processing unit is further configured to determine that the first security protection policy does not match the second security protection policy.

With reference to the tenth aspect, in some implementations of the tenth aspect, the transceiver unit is further configured to send the second security protection policy to a first direct communication discovery name management network element. The transceiver unit is further configured to receive third indication information from the first direct communication discovery name management network element, where the third indication information indicates that the first security protection policy does not match the second security protection policy.

With reference to the tenth aspect, in some implementations of the tenth aspect, the processing unit is further configured to determine the second security protection policy based on location information of the second terminal device.

With reference to the tenth aspect, in some implementations of the tenth aspect, the transceiver unit is further configured to receive the location information from the second terminal device.

With reference to the tenth aspect, in some implementations of the tenth aspect, the processing unit is further configured to trigger a gateway mobile location center to obtain the location information by using a location service.

With reference to the tenth aspect, in some implementations of the tenth aspect, the processing unit is further configured to request the location information of the second terminal device from an access and mobility management function network element serving the second terminal device.

With reference to the tenth aspect, in some implementations of the tenth aspect, the communication apparatus is a first direct communication discovery name management function network element, the terminal device is a first terminal device, and the transceiver unit is specifically configured to: When it is determined that a first security protection policy does not match a second security protection policy, send the first identifier to the first terminal device, where the first security protection policy is a security protection policy used by the first terminal device in the first service, the second security protection policy is a security protection policy used by the second terminal device in the first service, and the second terminal device is a terminal device that establishes a connection to the first terminal device for the first service.

With reference to the tenth aspect, in some implementations of the tenth aspect, the transceiver unit is further configured to receive the second security protection policy from a second direct communication discovery name management network element. The processing unit is further configured to determine that the first security protection policy does not match the second security protection policy.

With reference to the tenth aspect, in some implementations of the tenth aspect, the transceiver unit is further configured to send the first security protection policy to a second direct communication discovery name management network element. The transceiver unit is further configured to receive third indication information from the second direct communication discovery name management network element, where the third indication information indicates that the first security protection policy does not match the second security protection policy.

With reference to the tenth aspect, in some implementations of the tenth aspect, the processing unit is further configured to determine the first security protection policy based on location information of the first terminal device.

With reference to the tenth aspect, in some implementations of the tenth aspect, the transceiver unit is further configured to receive the location information from the first terminal device.

With reference to the tenth aspect, in some implementations of the tenth aspect, the processing unit is further configured to trigger a gateway mobile location center to obtain the location information by using a location service.

With reference to the tenth aspect, in some implementations of the tenth aspect, the processing unit is further configured to request the location information of the first terminal device from an access and mobility management function network element serving the first terminal device.

With reference to the tenth aspect, in some implementations of the tenth aspect, the communication apparatus is the direct communication discovery name management function network element, and the first identifier is carried in a direct communication discovery message.

According to an eleventh aspect, a communication apparatus is provided. The communication apparatus includes a transceiver unit and a processing unit. The processing unit is configured to determine that values of a plurality of security protection policies included in a security protection policy configuration of a first service are different, where the plurality of security protection policies include security protection policies of the first service at different geographical locations. The transceiver unit is configured to send second indication information to a policy control function network element, where the second indication information indicates that the security protection policy of the first service is capable of being forcibly modified during connection establishment.

With reference to the eleventh aspect, in some implementations of the eleventh aspect, the transceiver unit is further configured to receive a first request message from the policy control function network element, where the first request message is used to request the second indication information. The transceiver unit is specifically configured to send the second indication information to the policy control function network element based on the first request message.

According to a twelfth aspect, a communication apparatus is provided. The communication apparatus includes a transceiver unit. The transceiver unit is configured to send a second request message to a first direct communication discovery name management network element, where the second request message is used to request to obtain a first identifier, and the first identifier is used to modify a security protection policy of a terminal device. The transceiver unit is further configured to receive a second message from the first direct communication discovery name management network element, where the second message includes the first identifier. The transceiver unit is further configured to send the first identifier to a second terminal device.

For example, the first identifier is one or more of the following: a new security protection policy, a new security protection enabling manner, and first indication information, where the first indication information indicates that the security protection policy of the terminal device is allowed to be forcibly modified.

With reference to the twelfth aspect, in some implementations of the twelfth aspect, the second request message includes a second security protection policy, the second message further includes service discovery code and/or third indication information, the third indication information indicates that a first security protection policy does not match the second security protection policy, and the service discovery code corresponds to the first identifier. The first security protection policy is a security protection policy used by the first terminal device in the service, the second security protection policy is a security protection policy used by the second terminal device in the service, and the first terminal device is a terminal device that establishes a connection to the second terminal device for the service.

With reference to the twelfth aspect, in some implementations of the twelfth aspect, the transceiver unit is specifically configured to: When it is determined that the first security protection policy does not match the second security protection policy, send the first identifier to the second terminal device, where the first security protection policy is a security protection policy used by the first terminal device in the service, the second security protection policy is a security protection policy used by the second terminal device in the service, and the first terminal device is a terminal device that establishes a connection to the second terminal device for the service.

With reference to the twelfth aspect, in some implementations of the twelfth aspect, the transceiver unit is further configured to receive the first security protection policy from the first direct communication discovery name management network element. The communication apparatus further includes a processing unit, and the processing unit is configured to determine that the first security protection policy does not match the second security protection policy.

With reference to the twelfth aspect, in some implementations of the twelfth aspect, the transceiver unit is further configured to send the second security protection policy to the first direct communication discovery name management network element. The transceiver unit is further configured to receive third indication information from the first direct communication discovery name management network element, where the third indication information indicates that the first security protection policy does not match the second security protection policy.

With reference to the twelfth aspect, in some implementations of the twelfth aspect, the processing unit is further configured to determine the first security protection policy based on location information of the first terminal device.

With reference to the twelfth aspect, in some implementations of the twelfth aspect, the transceiver unit is further configured to receive the location information from the first terminal device.

With reference to the twelfth aspect, in some implementations of the twelfth aspect, the processing unit is further configured to trigger a gateway mobile location center to obtain the location information by using a location service.

With reference to the twelfth aspect, in some implementations of the twelfth aspect, the processing unit is further configured to request the location information of the first terminal device from an access and mobility management function network element serving the first terminal device.

With reference to the twelfth aspect, in some implementations of the twelfth aspect, the first identifier is carried in a direct communication discovery message.

According to a thirteenth aspect, this application provides a communication device, including a processor. The processor is coupled to a memory, and may be configured to execute instructions in the memory, to implement the method in any one of the first aspect or the possible implementations of the first aspect. The communication device further includes the memory. The communication device further includes a communication interface, and the processor is coupled to the communication interface.

In an implementation, the communication device is a first terminal device. When the communication device is the first terminal device, the communication interface may be a transceiver or an input/output interface.

In another implementation, the communication device is a chip or a chip system configured in the first terminal device. When the communication device is the chip or the chip system configured in the first terminal device, the communication interface may be an input/output interface.

The transceiver may be a transceiver circuit. The input/output interface may be an input/output circuit.

According to a fourteenth aspect, this application provides a communication device, including a processor. The processor is coupled to a memory, and may be configured to execute instructions in the memory, to implement the method in any one of the second aspect or the possible implementations of the second aspect, or implement the method in any one of the third aspect or the possible implementations of the third aspect. The communication device further includes the memory. The communication device further includes a communication interface, and the processor is coupled to the communication interface.

In an implementation, the communication device is a second terminal device. When the communication device is the second terminal device, the communication interface may be a transceiver or an input/output interface.

In another implementation, the communication device is a chip or a chip system configured in the second terminal device. When the communication device is the chip or the chip system configured in the second terminal device, the communication interface may be an input/output interface.

The transceiver may be a transceiver circuit. The input/output interface may be an input/output circuit.

According to a fifteenth aspect, this application provides a communication device, including a processor. The processor is coupled to a memory, and may be configured to execute instructions in the memory, to implement the method in any one of the fourth aspect or the possible implementations of the fourth aspect. The communication device further includes the memory. The communication device further includes a communication interface, and the processor is coupled to the communication interface.

In an implementation, the communication device is a core network element. When the communication device is the core network element, the communication interface may be a transceiver or an input/output interface.

In another implementation, the communication device is a chip or a chip system configured in the core network element. When the communication device is the chip or the chip system configured in the core network element, the communication interface may be an input/output interface.

The transceiver may be a transceiver circuit. The input/output interface may be an input/output circuit.

According to a sixteenth aspect, this application provides a communication device, including a processor. The processor is coupled to a memory, and may be configured to execute instructions in the memory, to implement the method in any one of the fifth aspect or the possible implementations of the fifth aspect. The communication device further includes the memory. The communication device further includes a communication interface, and the processor is coupled to the communication interface.

In an implementation, the communication device is an application function network element. When the communication device is the application function network element, the communication interface may be a transceiver or an input/output interface.

In another implementation, the communication device is a chip or a chip system configured in the application function network element. When the communication device is the chip or the chip system configured in the application function network element, the communication interface may be an input/output interface.

The transceiver may be a transceiver circuit. The input/output interface may be an input/output circuit.

According to a seventeenth aspect, this application provides a communication device, including a processor. The processor is coupled to a memory, and may be configured to execute instructions in the memory, to implement the method in any one of the sixth aspect or the possible implementations of the sixth aspect. The communication device further includes the memory. The communication device further includes a communication interface, and the processor is coupled to the communication interface.

In an implementation, the communication device is a direct communication discovery name management function network element. When the communication device is the direct communication discovery name management function network element, the communication interface may be a transceiver or an input/output interface.

In another implementation, the communication device is a chip or a chip system configured in the direct communication discovery name management function network element. When the communication device is the chip or the chip system configured in the direct communication discovery name management function network element, the communication interface may be an input/output interface.

The transceiver may be a transceiver circuit. The input/output interface may be an input/output circuit.

According to an eighteenth aspect, this application provides a processor, including: an input circuit, an output circuit, and a processing circuit. The processing circuit is configured to: receive a signal through the input circuit, and transmit a signal through the output circuit, so that the processor performs the methods in the foregoing aspects.

In a specific implementation process, the processor may be a chip, the input circuit may be an input pin, the output circuit may be an output pin, and the processing circuit may be a transistor, a gate circuit, a trigger, various logic circuits, or the like. An input signal received by the input circuit may be received and input by, for example, but not limited to, a receiver, a signal output by the output circuit may be output to, for example, but not limited to, a transmitter and transmitted by the transmitter, and the input circuit and the output circuit may be a same circuit, where the circuit is used as the input circuit and the output circuit at different moments. Specific implementations of the processor and the various circuits are not limited in embodiments of this application.

According to a nineteenth aspect, this application provides a processing apparatus, including: a communication interface and a processor. The communication interface is coupled to the processor. The communication interface is configured to input and/or output information. The information includes at least one of instructions or data. The processor is configured to execute a computer program, so that the processing apparatus performs the methods in the foregoing aspects.

According to a twentieth aspect, this application provides a processing apparatus, including: a processor and a memory. The processor is configured to: read instructions stored in the memory, receive a signal by using a receiver, and transmit a signal by using a transmitter, so that the processing apparatus performs the methods in the foregoing aspects.

Optionally, there are one or more processors. If there is a memory, there may alternatively be one or more memories.

Optionally, the memory may be integrated with the processor, or the memory and the processor are separately disposed.

In a specific implementation process, the memory may be a non-transitory (non-transitory) memory, such as a read-only memory (read-only memory, ROM). The memory and the processor may be integrated into one chip, or may be separately disposed in different chips. A type of the memory and a manner in which the memory and the processor are disposed are not limited in this embodiment of this application.

It should be understood that in a related information exchange process, for example, sending indication information may be a process of outputting the indication information from the processor, and receiving the indication information may be a process of inputting the received indication information to the processor. Specifically, the information output by the processor may be output to the transmitter, and the input information received by the processor may be from the receiver. The transmitter and the receiver may be collectively referred to as a transceiver.

The apparatuses in the nineteenth aspect and the twentieth aspect may be chips. The processor may be implemented by hardware, or may be implemented by software. When the processor is implemented by hardware, the processor may be a logic circuit, an integrated circuit, or the like. When the processor is implemented by software, the processor may be a general-purpose processor, and is implemented by reading software code stored in the memory. The memory may be integrated into the processor, or may be located outside the processor, and exist independently.

According to a twenty-first aspect, this application provides a computer program product. The computer program product includes a computer program (also referred to as code or instructions). When the computer program is run, a computer is enabled to perform the methods in the foregoing aspects.

According to a twenty-second aspect, this application provides a computer-readable storage medium. The computer-readable storage medium stores a computer program (also referred to as code or instructions). When the computer-readable storage medium is run on a computer, the computer is enabled to perform the methods in the foregoing aspects.

According to a twenty-third aspect, this application provides a communication system, including the first terminal device and the second terminal device, or including the first terminal device and/or second terminal device, the core network element, and the application function network element.

### BRIEF DESCRIPTION OF DRAWINGS

FIG. 1 is a schematic diagram of a network architecture to which an embodiment of this application is applicable;
FIG. 2 is a schematic flowchart of establishing a unicast connection by two terminal devices;
FIG. 3 is a schematic flowchart of a communication method according to an embodiment of this application;
FIG. 4 is a schematic flowchart of a communication method according to another embodiment of this application;
FIG. 5 is a schematic flowchart of a communication method according to another embodiment of this application;
FIG. 6A and FIG. 6B are a schematic flowchart of a communication method according to another embodiment of this application;
FIG. 7A and FIG. 7B are a schematic flowchart of a communication method according to another embodiment of this application;
FIG. 8 is a schematic block diagram of a communication apparatus according to an embodiment of this application; and
FIG. 9 is a schematic block diagram of a communication device according to an embodiment of this application.

### DESCRIPTION OF EMBODIMENTS

The following describes technical solutions of this application with reference to accompanying drawings.

The technical solutions in embodiments of this application may be applied to various communication systems, for example, a long term evolution (long term evolution, LTE) system, an LTE frequency division duplex (frequency division duplex, FDD) system, an LTE time division duplex (time division duplex, TDD) system, a universal mobile telecommunication system (universal mobile telecommunication system, UMTS), a worldwide interoperability for microwave access (worldwide interoperability for microwave access, WiMAX) communication system, a SG system or new radio (new radio, NR), a 6^{th} generation (6^{th} generation, 6G) system, or a future mobile communication system. The SG mobile communication system in this application includes a non-standalone (non-standalone, NSA) SG mobile communication system or a standalone (standalone, SA) SG mobile communication system. Alternatively, the communication system may be a public land mobile network (public land mobile network, PLMN), a device-to-device (device-to-device, D2D) communication system, a machine-to-machine (machine-to-machine, M2M) communication system, an internet of things (internet of things, IoT) communication system, or another communication system.

To facilitate understanding of the technical solutions in embodiments of this application, several basic concepts in this application are first briefly described.

### First, discovery type (discovery type):

In embodiments of this application, the discovery type includes open discovery (open discovery) or restricted discovery (restricted discovery). For related descriptions of the open discovery and the restricted discovery, refer to the 3^{rd} generation partnership project (3^{rd} generation partnership project, 3GPP) technical standard (technical standards, TS) 23.303, v16.1.0. Details are not described herein. For example, if a terminal device plays a game without a clear game partner, the terminal device can initiate open discovery and "randomly" find a game partner. If the terminal device has a clear partner to play the game, the terminal device may "designate" a partner by restricting discovery. Only the partner designated by the terminal device can access the game, and another partner cannot.

### Second, discovery model (discovery mode):

In the 4^{th} generation (4^{th} generation, 4G) ProSe standard (3GPP technical specification (technical specification, TS) 23.303, v16.0.0), two discovery models are defined: a model A (model A) and a model B (model B). A difference between the model A and the model B lies in a discovery (discovery) initiation manner.

The model A means "I am here". In a discovery process of the model A, user equipments (user equipment, UE) at two ends are announcing UE (announcing UE) and monitoring UE (monitoring UE) respectively. The announcing UE broadcasts "I am here". After receiving the message broadcast by the announcing UE, the monitoring UE determines, according to whether a service requirement of the monitoring UE is met, whether to establish a proximity-based service connection with the announcing UE. Specifically, after obtaining a ProSe parameter, the announcing UE actively broadcasts a proximity-based service in which the announcing UE is interested. After the monitoring UE obtains the ProSe parameter, the ProSe parameter is used to monitor a proximity-based service in which the monitoring UE is interested. In other words, in the discovery process of the model A, the first message is initiated by the announcing UE, and after receiving the message from the announcing UE, the monitoring UE determines, according to whether the service requirement of the monitoring UE is met, whether to continue to initiate a unicast establishment procedure.

The model B means "Who is there/Where are you?". In a discovery procedure of the model B, UEs at two ends are respectively discoveree UE (discoveree UE) and discoverer UE (discoverer UE). In the discovery procedure of the model B, the first message is initiated by the discoverer UE to request a proximity-based service. After receiving the request, the discoveree UE determines, according to whether the discoveree UE can provide the proximity-based service, whether to reply to the request message. Further, after receiving the reply message, the discoverer UE initiates a unicast establishment procedure.

### Third, security protection policy and security protection policy matching:

The security protection policy is a policy used to describe whether to enable security protection and may be used to determine a security protection method. In embodiments of this application, security protection policies used in different scenarios include at least one of the following protection policies:
a control plane confidentiality protection policy in a PCS connection;
a control plane integrity protection policy in a PCS connection;
a user plane confidentiality protection policy in a PCS connection; or
a user plane integrity protection policy in a PCS connection.

Control plane confidentiality protection is to protect signaling confidentiality during transmission. Control plane integrity protection is to protect signaling integrity during transmission. User plane confidentiality protection is to protect confidentiality of user plane data during transmission. User plane integrity protection is to protect integrity of user plane data during transmission. In embodiments of this application, integrity means that obtained signaling or data is consistent with original signaling or data and is not modified. Therefore, integrity protection is used to prevent an attacker from attacking the signaling or data. Confidentiality means that real content cannot be directly seen. Therefore, confidentiality protection is used to make the attacker "unreadable". In addition, confidentiality protection in embodiments of this application may also be referred to as encryption protection. This is uniformly described herein, and details are not described below again.

In embodiments of this application, the control plane confidentiality protection policy and the control plane integrity protection policy belong to a control plane security protection policy; and the user plane confidentiality protection policy and the user plane integrity protection policy belong to a user plane security protection policy. This is uniformly described herein, and details are not described below again.

In embodiments of this application, there are three possible values of the security protection policy: required (REQUIRED), not needed (NOT NEEDED), and preferred (PREFERRED). REQUIRED indicates that security needs to be enabled, NOT NEEDED indicates that security does not need to be enabled, and PREFERRED indicates that security is preferred to be enabled, that is, security may be enabled or may be disabled. This is uniformly described herein, and details are not described below again.

It should be noted that a specific value name of the security protection policy determined by a directly connected application server or application function network element based on an application requirement may not be the foregoing three types (REQUIRED, NOT NEEDED, and PREFERRED). However, the security protection policy determined by the directly connected server or application function network element based on the application requirement is also classified into security enabling required, security enabling not needed, and security enabling preferred. A specific name is not limited herein. In other words, in the security protection policy determined by the directly connected application server or application function network element, a value indicating that security needs to be enabled may not be REQUIRED, a value indicating that security is preferred to be enabled may not be PREFERRED, and/or a value indicating that security does not need to be enabled may not be NOT NEEDED. A core network element maps the security protection policy determined by the directly connected application server or application function network element based on the application requirement to the foregoing three values used in a network, that is, REQUIRED, NOT NEEDED, and PREFERRED. In the following embodiments, for ease of differentiation, the security protection policy configuration determined by the directly connected application server or application function network element based on the application requirement is denoted as a security protection policy configuration #1.

For example, the control plane confidentiality protection policy in the PCS connection is used as an example. In this case, the control plane confidentiality protection policy in the PCS connection includes: The control plane confidentiality protection in the PCS connection is enabled (REQUIRED), the control plane confidentiality protection in the PCS connection is disabled (NOT NEEDED), or the control plane confidentiality protection in the PCS connection is optional (PREFERRED). For an example of the control plane integrity protection policy in the PCS connection, the user plane confidentiality protection policy in the PCS connection, or the user plane integrity protection policy in the PCS connection, refer to the example of the control plane confidentiality protection policy in the PCS connection. Details are not described herein again.

It should be noted that, in embodiments of this application, when the security protection policy is sent, generally, only one of the three types (REQUIRED, NOT NEEDED, and PREFERRED) is selected for sending. In some special scenarios, at least two types may be selected for sending, and one of types is PREFERRED. For example, when NOT NEEDED and PREFERRED are sent, it indicates that security protection prefers to be disabled. When REQUIRED and PREFERRED are sent, it indicates that security protection prefers to be enabled.

In embodiments of this application, for a protection policy in the security protection policy, assuming that a protection policy of one terminal device is that protection is enabled (REQUIRED) and a protection policy of the other terminal device is that protection is disabled (NOT NEEDED), it may be considered that the protection policies of the two terminal devices do not match; otherwise, it may be considered that the protection policies of the two terminal devices match.

For example, the user plane confidentiality protection in the PCS connection is used as an example. Assuming that a user plane confidentiality protection policy of a first terminal device in the PCS connection is disabled (NOT NEEDED) and a user plane confidentiality protection policy of a second terminal device in the PCS connection is enabled (REQUIRED) or assuming that a user plane confidentiality protection policy of a first terminal device in the PCS connection is enabled (REQUIRED) and a user plane confidentiality protection policy of a second terminal device in the PCS connection is disabled (NOT NEEDED), it may be determined that the user plane confidentiality protection policies of the first terminal device and the second terminal device in the PCS connection do not match. When the user plane confidentiality protection policies of the first terminal device and the second terminal device in the PCS connection are other values, it may be considered that the user plane confidentiality protection policies of the first terminal device and the second terminal device in the PCS connection match.

In a possible implementation, in embodiments of this application, when the security protection policy includes a protection policy, that the security protection policy is matched means that the protection policy is matched. For example, assuming that the security protection policy includes only the user plane confidentiality protection policy in the PCS connection, it may be considered that the security protection policy is matched provided that the user plane confidentiality protection policy in the PCS connection is matched.

In another possible implementation, in embodiments of this application, when the security protection policy includes a plurality of protection policies, that the security protection policy is matched means that each of the plurality of protection policies is matched. For example, assuming that the security protection policy includes the user plane confidentiality protection policy and the integrity protection policy in the PCS connection, when the user plane confidentiality protection policy in the PCS connection is matched and the user plane integrity protection policy in the PCS connection is matched, it may be considered that the security protection policy is matched; otherwise, it is considered that the security protection policy is not matched.

It should be noted that in embodiments of this application, several protection policies in the control plane confidentiality protection policy in the PCS connection, the control plane integrity protection policy in the PCS connection, the user plane confidentiality protection policy in the PCS connection, and the user plane integrity protection policy of the PCS connection may be the same or may be different. This is not specifically limited in embodiments of this application.

### Fourth, security protection methods:

The security protection methods in embodiments of this application are classified into the following two types.
1. A security protection method used on a control plane of the PCS connection is used to protect control plane signaling of the PCS connection.
2. A security protection method used on a user plane of the PCS connection is used to protect user plane data of the PCS connection.

In embodiments of this application, the security protection method herein includes whether to enable confidentiality protection and/or integrity protection. This is uniformly described herein, and details are not described below again.

For example, the security protection method used on the control plane of the PCS connection may include whether confidentiality protection and/or integrity protection of the control plane of the PCS connection are/is enabled; or the security protection method used on the user plane of the PCS connection may include whether confidentiality protection and/or integrity protection of the user plane of the PCS connection are/is enabled. It should be noted that, in embodiments of this application, the security protection method used on the control plane of the PCS connection and the security protection method used on the user plane of the PCS connection belong to a security protection method of the PCS connection. This is uniformly described herein, and details are not described below again.

The following describes the technical solutions in embodiments of this application with reference to the accompanying drawings in embodiments of this application. Unless otherwise specified, "/" in the descriptions of embodiments of this application represents an "or" relationship between associated objects. For example, A/B may represent A or B. In this application, "and/or" describes only an association relationship for describing associated objects and represents that three relationships may exist. For example, A and/or B may represent the following three cases: Only A exists, both A and B exist, and only B exists. A and B may be singular or plural. In addition, in the descriptions of this application, "a plurality of means two or more than two unless otherwise specified. "At least one of the following items (pieces)" or a similar expression thereof refers to any combination of these items, including any combination of singular items (pieces) or plural items (pieces). For example, at least one item (piece) of a, b, or c may indicate: a, b, c, a and b, a and c, b and c, or a, b, and c, where a, b, and c may be singular or plural. In addition, to clearly describe the technical solutions in embodiments of this application, terms such as "first" and "second" are used in embodiments of this application to distinguish between same items or similar items that provide basically same functions or purposes. A person skilled in the art may understand that the terms such as "first" and "second" do not limit a quantity or an execution sequence, and the terms such as "first" and "second" do not indicate a definite difference. In addition, in embodiments of this application, the word such as "example" or "for example" is used to represent giving an example, an illustration, or a description. Any embodiment or design scheme described as an "example" or "for example" in embodiments of this application should not be explained as being more preferred or having more advantages than another embodiment or design scheme. Exactly, use of the word such as "example" or "for example" is intended to present a relative concept in a specific manner for ease of understanding.

In addition, a network architecture and a service scenario described in embodiments of this application are intended to describe the technical solutions in embodiments of this application more clearly, and do not constitute a limitation on the technical solutions provided in embodiments of this application. A person of ordinary skill in the art may know that: With the evolution of the network architecture and the emergence of new service scenarios, the technical solutions provided in embodiments of this application are also applicable to similar technical problems.

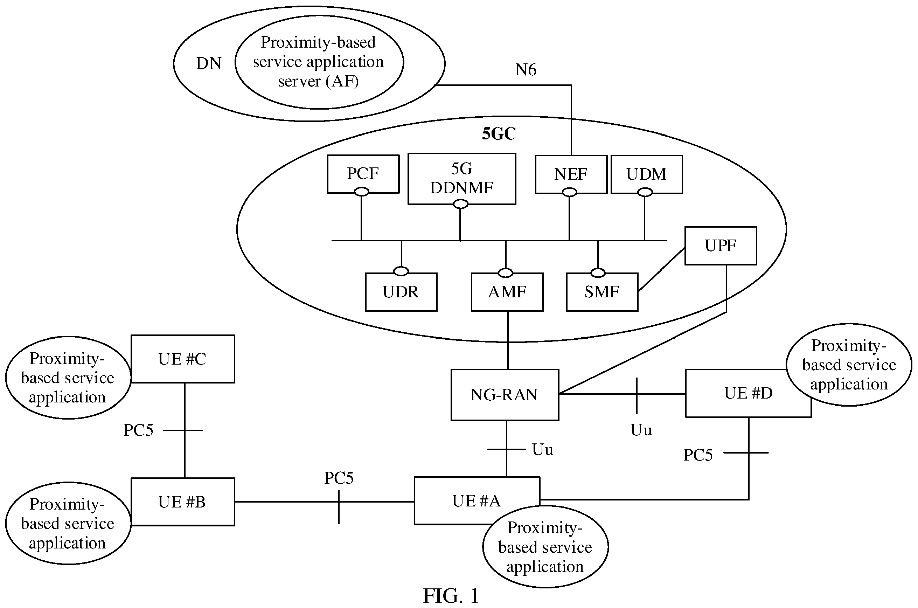

For ease of understanding of embodiments of this application, an application scenario of embodiments of this application is first described in detail with reference to FIG. 1.

FIG. 1 is a schematic diagram of a network architecture applicable to a method according to an embodiment of this application. As shown in the figure, the network architecture may specifically include the following network elements:
1. User equipment (user equipment, UE): may be referred to as a terminal device, a terminal, an access terminal, a subscriber unit, a subscriber station, a mobile station, a remote station, a remote terminal, a mobile device, a user terminal, a wireless communication device, a user agent, or a user apparatus. The terminal device may alternatively be a cellular phone, a cordless phone, a session initiation protocol (session initiation protocol, SIP) phone, a wireless local loop (wireless local loop, WLL) station, a personal digital assistant (personal digital assistant, PDA), a handheld device having a wireless communication function, a computing device, another processing device connected to a wireless modem, a vehicle-mounted device, an uncrewed aerial vehicle, a wearable device, a terminal device in a SG network, a terminal device in an evolved public land mobile network (public land mobile network, PLMN), or the like. This is not limited in embodiments of this application. The UE may be connected to a next-generation radio access network (next-generation radio access network, NG-RAN) device through a Uu interface. For example, UE #A and UE #D shown in FIG. 1 are connected to the NG-RAN through the Uu interface. Two UEs having a proximity-based service application (proximity-based service application) function may also be connected through a PCS interface. For example, as shown in FIG. 1, the UE #A and UE #B are connected through the PCS interface, the UE #B and UE #C are connected through the PCS interface, and the UE #A and the UE #D are connected through the PCS interface.
2. Access network (access network, AN): is used to provide a network access function for an authorized user in a specific area, and can use transmission tunnels with different quality based on user levels, service requirements, and the like. Different access networks may use different access technologies. A current access network technology includes a radio access network technology used in a 3^{rd} generation (3^{rd} generation, 3G) system, a radio access network technology used in a 4G system, the NG-RAN technology shown in FIG. 1 (for example, a radio access technology used in a SG system), or the like.

An access network that implements a network access function based on a wireless communication technology may be referred to as a radio access network (radio access network, RAN). The radio access network can manage radio resources, provide an access service for a terminal, and further complete forwarding of a control signal and user data between a terminal and a core network.

The radio access network device may be, for example, a base station (NodeB), an evolved NodeB (evolved NodeB, eNB, or eNodeB), a next-generation node base station (next-generation Node Base station, gNB) in a SG mobile communication system, a base station in a mobile communication system, or an access point (access point, AP) in a wireless fidelity (wireless fidelity, Wi-Fi) system, or may be a radio controller in a cloud radio access network (cloud radio access network, CRAN) scenario. Alternatively, the radio access network device may be a relay station, an access point, a vehicle-mounted device, an uncrewed aerial vehicle, a wearable device, a network device in a SG network, a network device in an evolved PLMN, or the like. A specific technology and a specific device form that are used by a radio access network device are not limited in embodiments of this application.

3. Access management network element: is mainly configured to perform mobility management and access management, is responsible for transferring a user policy between user equipment and a policy control function (policy control function, PCF) network element, and the like, and may be configured to implement a function other than session management in mobility management entity (mobility management entity, MME) functions, for example, a lawful interception function or an access authorization (or authentication) function.

In a SG communication system, the access management network element may be an access and mobility management function (access and mobility management function, AMF) network element. In a future communication system, the access management network element may still be an AMF network element, or may have another name. This is not limited in this application.

4. Session management network element: is mainly configured to: manage a session, allocate and manage an internet protocol (internet protocol, IP) address of user equipment, select an endpoint that can manage a user plane function interface and a policy control and charging function interface, perform downlink data notification, and the like.

In a SG communication system, the session management network element may be a session management function (session management function, SMF) network element. In a future communication system, the session management network element may still be the SMF network element, or may have another name. This is not limited in this application.

5. User plane network element: is configured to perform functions such as packet routing and forwarding, quality of service (quality of service, QoS) processing of user plane data, user plane data forwarding, session/flow level-based charging statistics, and bandwidth limitation.

In a SG communication system, the user plane network element may be a user plane function (user plane function, UPF) network element. In a future communication system, the user plane network element may still be the UPF network element, or may have another name. This is not limited in this application.

6. Data network element: is configured to provide a network for data transmission.

In a SG communication system, the data network element may be a data network (data network, DN) element. In a future communication system, the data network element may still be the DN element, or may have another name. This is not limited in this application.

7. Policy control network element: is configured to provide guidance on a unified policy framework for network behavior, provide policy rule information for a control plane function network element (for example, an AMF or SMF network element), and the like.

In a 4G communication system, the policy control network element may be a policy and charging rules function (policy and charging rules function, PCRF) network element. In a SG communication system, the policy control network element may be a policy control function (policy control function, PCF) network element. In a future communication system, the policy control network element may still be the PCF network element, or may have another name. This is not limited in this application.

8. Data management network element: is configured to process a user equipment identifier, access authentication, perform registration management and mobility management, and the like.

In a SG communication system, the data management network element may be a unified data management (unified data management, UDM) network element. In a 4G communication system, the data management network element may be a home subscriber server (home subscriber server, HSS) network element. In a future communication system, the data management network element may still be the UDM network element, or may have another name. This is not limited in this application.

9. Data repository network element: is configured to be responsible for an access function of subscription data, policy data, application data, and other types of data.

In a SG communication system, the data repository network element may be a unified data repository (unified data repository, UDR) network element. In a future communication system, the data repository network element may still be the UDR element, or may have another name. This is not limited in this application.

10. Network exposure function (network exposure function, NEF) entity: is used to securely expose, to the outside, a service and a capability that are provided by a 3GPP network function.

11. ProSe application server (application server): may be an application function (application function, AF) of a DN. An AF that has a ProSe application server function has all functions of the AF defined in Release 23.501 R-15, as well as a related function used for a ProSe service. In other words, in a user plane architecture, the ProSe application server and UE perform user plane communication through a UE-RAN-UPF-AF path. The ProSe application server may further communicate with another network function (network function, NF) in a SG core network (SG core network, SGC) by using an NEF in a control plane architecture, for example, communicating with a PCF by using the NEF. If the ProSe application server is the AF of the DN, and the AF is disposed by an operator of the SGC, the ProSe application server may further directly communicate with another NF in the SGC by not using the NEF in the control plane architecture, for example, directly communicate with the PCF.

12. SG direct communication discovery name management function (direct discovery name management function, DDNMF): has a function of allocating and processing a mapping relationship between a proximity-based service application identifier (ProSe application identifier) and proximity-based service application code (ProSe application code) for open proximity-based service discovery (open ProSe discovery). In restricted proximity-based service discovery (restricted ProSe direct discovery), the SG DDNMF may communicate with a proximity-based service application server through a PC2 interface to process authorization of a discovery request (discovery request), and also has a function of allocating and processing a mapping relationship between an application identifier (application identifier) and code used in a restricted proximity-based service, where the code used in the restricted proximity-based service includes proximity-based service restricted code (ProSe restricted code), proximity-based service request code (ProSe query code), and proximity-based service response code (ProSe response code).

In a current standard definition, the SG DDNMF is in a PLMN granularity, that is, one PLMN has only one SG DDNMF. One SG DDNMF can be uniquely determined by using a mobile country code (mobile country code, MCC) and a mobile network code (mobile network code, MNC).

It may be understood that the network elements or the functions may be network elements in a hardware device, may be software functions running on dedicated hardware, or may be virtualized functions instantiated on a platform (for example, a cloud platform). The network elements or the functions may be implemented by one device, or may be jointly implemented by a plurality of devices, or may be one functional module in one device. This is not specifically limited in embodiments of this application.

It should be further understood that the foregoing network architecture applicable to embodiments of this application shown in FIG. 1 is merely an example for description, and a network architecture applicable to embodiments of this application is not limited thereto. Any network architecture that can implement functions of the foregoing network elements is applicable to embodiments of this application.

For example, in some network architectures, network function network element entities such as an AMF, an SMF network element, a PCF network element, and a UDM network element are all referred to as network function (network function, NF) network elements. Alternatively, in some other network architectures, a set of network elements such as an AMF, an SMF network element, a PCF network element, and a UDM network element may be referred to as a control plane function network element.

For the ProSe, before establishing unicast communication, UEs at two ends need to first perform a ProSe discovery procedure, to determine peer UE for communication.

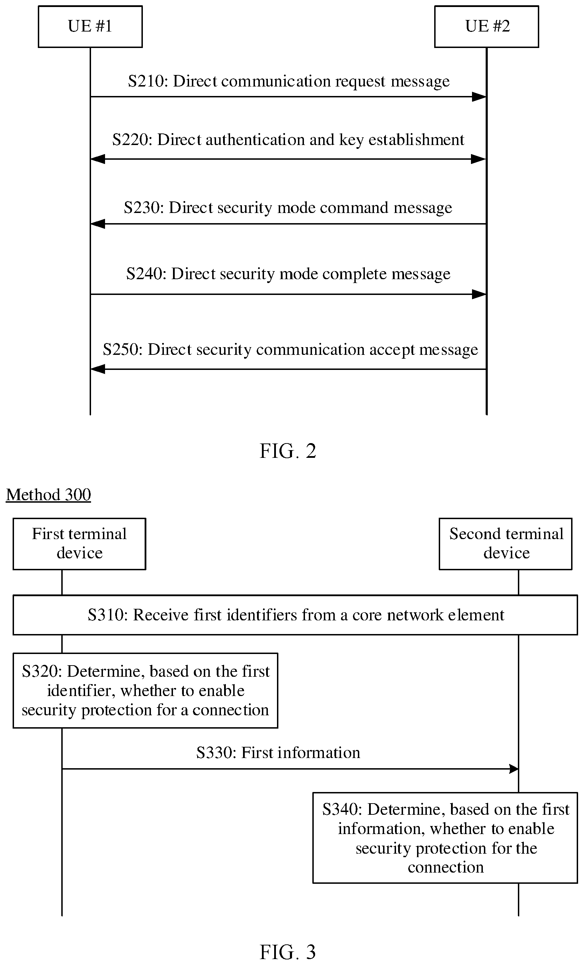

With reference to FIG. 2, the following describes a process of establishing a unicast connection between two UEs by using an example in which UE #1 establishes a unicast connection to UE #2. In a discovery procedure, the UE #1 and the UE #2 may respectively correspond to monitoring UE and announcing UE in a model A, or the UE #1 and the UE #2 may respectively correspond to discoverer UE and discoveree UE in a model B.

S210: The UE #1 sends a direct communication request (direct communication request, DCR) message to the UE #2, to initiate to establish PCS unicast communication.

The direct communication request message may include a security capability (security capability) of the UE #1 and a control plane security protection policy (signaling security policy) of the UE #1. The security capability of the UE is a security protection algorithm supported by the UE, and the security protection algorithm includes a confidentiality protection algorithm and/or an integrity protection algorithm.

S220: The UE #1 and the UE #2 perform a direct authentication and key establishment procedure.

S230: The UE #2 sends a direct security mode (direct security mode, DSM) command (command) message to the UE #1.

After receiving the direct communication request message from the UE #1, the UE #2 first determines whether the control plane security protection policy of the UE #1 matches a control plane security protection policy of the local end.

If the control plane security protection policy of the UE #1 does not match the control plane security protection policy of the local end, the UE #2 rejects to establish the connection. If the control plane security protection policy of the UE #1 matches the control plane security protection policy of the local end, the UE #2 determines a control plane security protection enabling manner based on the control plane security protection policies of the two UEs. Further, the UE #2 sends the direct security mode command message to the UE #1, where the direct security mode command message includes a selected security protection algorithm, and the security protection algorithm includes a confidentiality protection algorithm and an integrity protection algorithm. It should be noted that the security protection algorithm included in the direct security mode command message is determined based on the control plane security protection enabling manner determined by the UE #2, the security capability of the UE #1, and a security capability of the UE #2.

The control plane confidentiality protection enabling manner and an integrity protection enabling manner that are selected by the UE #2 may be indicated to the UE #1 by using the security protection algorithm carried in the direct security mode command message. For example, a null algorithm (Null) indicates that corresponding security protection is not enabled, and a non-null algorithm (non-Null) indicates that corresponding security protection is enabled.

S240: The UE #1 sends a direct security mode complete (complete) message to the UE #2.

After receiving the direct security mode command message from the UE #2, the UE #1 detects whether the security protection enabling manner implicitly indicated by the selected security algorithm carried in the direct security mode command message meets the control plane security protection policy of the local end. If no, the UE #1 rejects to establish the connection. If yes, the UE #1 sends the direct security mode complete message to the UE #2. The direct security mode complete message includes a user plane security protection policy (user plane security policy) of the UE #1.

S250: The UE #2 sends a direct communication accept (direct communication accept, DCA) message to the UE #1.

After receiving the direct security mode complete message from the UE #1, the UE #2 first determines whether the user plane security protection policy of the UE #1 matches a user plane security protection policy of the local end.

If the user plane security protection policy of the UE #1 does not match the user plane security protection policy of the local end, the UE #2 rejects to establish the connection. If the user plane security protection policy of the UE #1 matches the user plane security protection policy of the local end, the UE #2 determines a user plane security protection enabling manner based on the user plane security protection policies of the two UEs. Further, the UE #2 sends a direct communication accept message to the UE #1, where the direct communication accept message includes user plane security configuration (user plane security configuration) information, and is used to notify the UE #1 of a selected user plane security protection enabling manner.

As described above, in the unicast connection establishment procedure, the two UEs may fail to establish the unicast connection because the security protection policies at the two ends do not match. As a result, signaling is wasted in the discovery procedure before the unicast connection establishment procedure, and network resource efficiency and interworking of a direct connection service are affected.

In view of this, this application provides a method for determining a security protection enabling manner, so that two UEs can successfully establish a connection.

It should be understood that a specific structure of an execution body of the method provided in embodiments of this application is not specifically limited in following embodiments of this application provided that a program that records code of the method provided in embodiments of this application can be run to perform communication according to the method provided in embodiments of this application. For example, the method provided in embodiments of this application may be performed by the terminal device, the core network device, or a functional module that is in the terminal device or the core network device and that can invoke and execute the program.

It should be further noted that the security protection policy recorded in embodiments of this application includes a control plane security protection policy and/or a user plane security protection policy. Further, the control plane security protection policy includes a control plane confidentiality protection policy and/or a control plane integrity protection policy, and the user plane security protection policy includes a user plane confidentiality protection policy and/or a user plane integrity protection policy. The security protection enabling manner recorded in embodiments of this application includes a control plane security protection enabling manner and/or a user plane security protection enabling manner. Further, the control plane security protection enabling manner includes a control plane confidentiality protection enabling manner and/or a control plane integrity enabling manner. The user plane security protection enabling manner includes a user plane confidentiality protection enabling manner and/or a user plane integrity protection enabling manner.

Without loss of generality, the following describes in detail the method for determining a security protection enabling manner provided in embodiments of this application by using interaction between the terminal device or the core network device as an example.

FIG. 3 is a schematic flowchart of a method for determining a security protection enabling manner according to an embodiment of this application. As shown in FIG. 3, the method 300 may include S310 to S340. The following describes the steps in detail.

S310: A first terminal device and a second terminal device respectively receive first identifiers from a core network element.

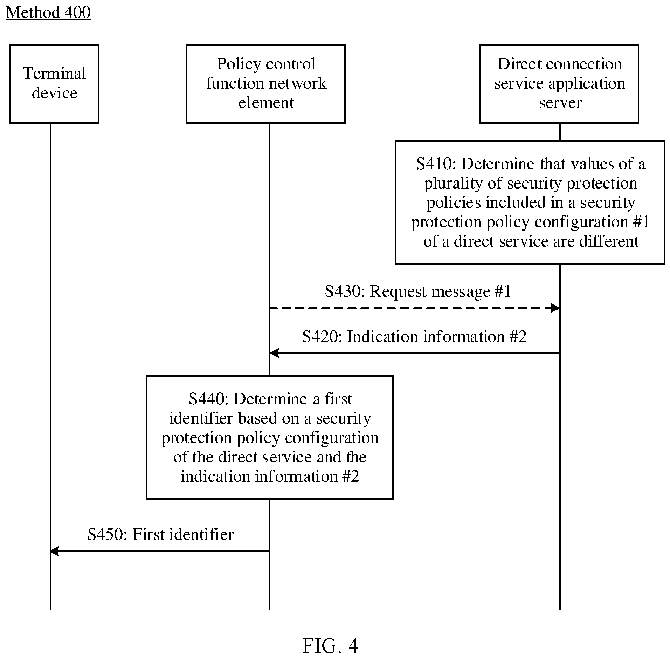

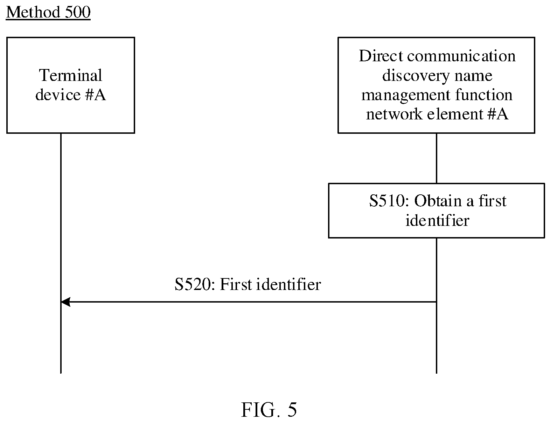

For the first terminal device, the core network element may be a first policy control function network element, a first direct communication discovery name management function network element, or the like that provides a service for the first terminal device. This is not limited in this application. For the second terminal device, the core network element may be a second policy control function network element, a second direct communication discovery name management function network element, or the like that provides a service for the second terminal device. The first terminal device and the second terminal device may obtain the first identifiers from a same core network element, or may obtain the first identifiers from different core network elements. The following describes, with reference to FIG. 4, how a terminal device obtains a first identifier from a policy control function network element. For brevity, details are not described herein. In addition, the following describes, with reference to FIG. 5, how a terminal device obtains a first identifier from a direct communication discovery name management function network element. For brevity, details are not described herein.

The first identifier is used to modify a security protection policy of the terminal device. Specifically, the first identifier is used to modify a security protection policy used by the terminal device in a first service, and the security protection policy used by the terminal device in the first service is configured by the policy control function network element for the terminal device.

For example, the first identifier is one or more of the following: a new security protection policy, a new security protection enabling manner, and indication information #1 (an example of first indication information).

The new security protection policy is a security protection policy determined by the core network element based on a security protection policy configuration of the first service. The new security protection policy may be the same as a security protection policy included in the security protection policy configuration, or may be different from a security protection policy included in the security protection policy configuration. This is not limited in embodiments of this application. Because the first identifier is used to modify the security protection policy of the terminal device, the new security protection policy may be considered as a security protection policy used when the security protection policy of the terminal device is modified.

The new security protection enabling manner is a security protection enabling manner determined by the core network element based on a security protection policy configuration of the first service. The new security protection enabling manner may match a security protection policy included in the security protection policy configuration, or may not match a security protection policy included in the security protection policy configuration. This is not limited in embodiments of this application. That the security protection enabling manner matches the security protection policy may be: The security protection enabling manner is that security protection is enabled, and a value of the security protection policy is not NOT NEEDED; or the security protection enabling manner is that security protection is disabled, and a value of the security protection policy is not REQUIRED. That the security protection enabling manner does not match the security protection policy may be: The security protection enabling manner is that security protection is enabled, and a value of the security protection policy is NOT NEEDED; or the security protection enabling manner is that security protection is disabled, and a value of the security protection policy is REQUIRED. Because the first identifier is used to modify the security protection policy of the terminal device, the new security protection enabling manner may be considered as a security protection enabling manner used when the security protection policy of the terminal device is modified.

The indication information #1 indicates that the security protection policy of the terminal device is allowed to be forcibly modified. Specifically, the indication information #1 indicates that the security protection policy of the terminal device is allowed to be forcibly modified in a process of establishing a connection of the first service. Alternatively, the indication information #1 indicates that the security protection policy used by the terminal device in the first service is allowed to be forcibly modified.

For example, the first identifier may be named as a security protection policy forcible modification identifier. For example, the first identifier may be denoted as an "overrule identifier" or an "overwrite identifier".

Optionally, the first identifier may further indicate the security protection enabling manner used by the terminal device, and is not used to modify the security protection policy of the terminal device. Specifically, the first identifier indicates a security protection enabling manner used by the terminal device in the first service.

S320: The first terminal device determines, based on the first identifier, whether to enable security protection for the connection.

Specifically, in a process in which the first terminal device establishes the connection of the first service to the second terminal device, the first terminal device determines, based on the first identifier, whether to enable security protection for the connection. For example, the first service is a direct connection service, and a connection of the first service is a unicast connection.

It should be noted that the first terminal device may determine, based on the first identifier obtained from the core network element, whether to enable security protection for the connection, or may determine, based on the first identifier obtained from the second terminal device, whether to enable security protection for the connection. If the first terminal device determines, based on the first identifier obtained from the core network element, whether to enable security protection for the connection, it may be understood that the first terminal device may determine, based on the first identifier by default, whether to enable security protection for the connection of the first service, thereby eliminating additional processing logic and improving processing efficiency of the first terminal device. If the first terminal device determines, based on the first identifier obtained from the second terminal device, whether to enable security protection for the connection, the first terminal device may autonomously select whether to determine, based on the first identifier, whether to enable security protection for the connection of the first service. This has better flexibility.

The first terminal device and the second terminal device are respectively announcing UE and monitoring UE in a discovery mode A, or the first terminal device and the second terminal device are respectively discoveree UE and discoverer UE in a discovery mode B. In the connection establishment procedure after a discovery procedure, the second terminal device is initiator UE in the connection establishment procedure, and the first terminal device is receiver UE in the connection establishment procedure.

Whether to enable security protection for the connection includes whether to enable control plane security protection for the connection and/or user plane security protection for the connection. Whether to enable control plane security protection for the connection includes whether to enable control plane confidentiality protection for the connection and/or control plane integrity protection for the connection. Whether to enable user plane security protection for the connection includes whether to enable user plane confidentiality protection for the connection and/or user plane integrity protection for the connection.

It may be understood that whether to enable security protection for the connection may be equivalent to a security protection enabling manner for the connection. Therefore, S320 may be replaced with that the first terminal device determines a security protection enabling manner for the connection based on the first identifier. The security protection enabling manner for the connection includes a control plane security protection enabling manner and/or a user plane security protection enabling manner. The control plane security protection enabling manner includes a control plane confidentiality protection enabling manner and/or a control plane integrity protection enabling manner. The user plane security protection enabling manner includes a user plane confidentiality protection enabling manner and/or a user plane integrity protection enabling manner. The security protection enabling manner includes enabling security protection or disabling security protection.

As described in S310, the first identifier may be in different forms. Further, for different first identifiers, methods for determining, by the first terminal device based on the first identifier, whether to enable security protection for the connection are also different. Details are as follows.

In a possible implementation, the first identifier is the indication information #1.

In an example, the first terminal device determines, based on the indication information #1 and a security protection policy #1 (an example of a first security protection policy), whether to enable security protection for the connection. The security protection policy #1 is a security protection policy used by the first terminal device in the first service. Therefore, when determining, based on the indication information #1, whether to enable security protection for the connection, the first terminal device directly determines, based on the security protection policy of the local end, whether to enable security protection for the connection. The first terminal device determines, based on the indication information #1 and according to the security protection policy #1, whether to enable security protection for the connection, so that processing logic of the first terminal device is simpler, and processing efficiency of the first terminal device is improved.

For example, if the first terminal device obtains the indication information #1, and a control plane security protection policy #1 and/or a user plane security protection policy #1 included in the security protection policy #1 are/is that security protection needs to be enabled, the first terminal device determines to enable control plane security protection and/or user plane security protection for the connection. The determining to enable control plane security protection for the connection includes determining to enable control plane confidentiality protection and/or control plane integrity protection for the connection, and the determining to enable user plane security protection for the connection includes determining to enable user plane confidentiality protection and/or user plane integrity protection for the connection.

Specifically, when the first terminal device obtains the indication information #1, if a value of a control plane confidentiality protection policy included in the control plane security protection policy #1 is REQUIRED, the first terminal device determines to enable control plane confidentiality protection for the connection; if a value of a control plane integrity protection policy included in the control plane security protection policy #1 is REQUIRED, the first terminal device determines to enable control plane integrity protection for the connection; if a value of a user plane confidentiality protection policy included in the user plane security protection policy #1 is REQUIRED, the first terminal device determines to enable user plane confidentiality protection for the connection; or if a value of a user plane integrity protection policy included in the user plane security protection policy #1 is REQUIRED, the first terminal device determines to enable user plane integrity protection for the connection.

For another example, if the first terminal device obtains the indication information #1, and a control plane security protection policy #1 and/or a user plane security protection policy #1 included in the security protection policy #1 are/is that security protection does not need to be enabled, the first terminal device determines to disable control plane security protection and/or user plane security protection for the connection. The disabling control plane security protection for the connection includes disabling control plane confidentiality protection and/or control plane integrity protection for the connection, and the disabling user plane security protection for the connection includes disabling user plane confidentiality protection and/or user plane integrity protection for the connection.

Specifically, when the first terminal device obtains the indication information #1, if a value of a control plane confidentiality protection policy included in the control plane security protection policy #1 is NOT NEEDED, the first terminal device determines to disable control plane confidentiality protection for the connection; if a value of a control plane integrity protection policy included in the control plane security protection policy #1 is NOT NEEDED, the first terminal device determines to disable control plane integrity protection for the connection; if a value of a user plane confidentiality protection policy included in the user plane security protection policy #1 is NOT NEEDED, the first terminal device determines to disable user plane confidentiality protection for the connection; or if a value of a user plane integrity protection policy included in the user plane security protection policy #1 is NOT NEEDED, the first terminal device determines to disable user plane integrity protection for the connection.

Optionally, when determining, based on the indication information #1 and according to the security protection policy #1, whether to enable integrity protection for the connection, the first terminal device may further consider an integrity protection rate that can be supported by the first terminal device.

In another example, the first terminal device determines, based on the indication information #1, the security protection policy #1, and the integrity protection rate that can be supported by the first terminal device, whether to enable integrity protection for the connection, so that the first terminal device can determine, based on a real-time processing capability of the first terminal device, whether to enable integrity protection. This is more suitable for a real-time requirement of the first terminal device.

For example, the first terminal device obtains the indication information #1, a control plane integrity protection policy #1 and/or a user plane integrity protection policy #1 included in the security protection policy #1 are/is that security protection needs to be enabled, and an integrity protection rate that can be supported by the first terminal device can support enabling of control plane integrity protection and/or user plane integrity protection. In this case, the first terminal device determines to enable control plane integrity protection and/or user plane integrity protection for the connection.

Specifically, when the first terminal device obtains the indication information #1, if a value of a control plane integrity protection policy included in the control plane security protection policy #1 is REQUIRED, and the integrity protection rate that can be supported by the first terminal device can support enabling of control plane integrity protection, the first terminal device determines to enable control plane integrity protection for the connection; or if a value of a user plane integrity protection policy included in the user plane security protection policy #1 is REQUIRED, and the integrity protection rate that can be supported by the first terminal device can support enabling of user plane integrity protection, the first terminal device determines to enable user plane integrity protection for the connection.

For yet another example, the first terminal device obtains the indication information #1, a control plane integrity protection policy #1 and/or a user plane integrity protection policy #1 included in the security protection policy #1 are/is that security protection needs to be enabled, and an integrity protection rate that can be supported by the first terminal device does not support enabling of control plane integrity protection and/or user plane integrity protection. In this case, the first terminal device determines to disable control plane integrity protection and/or user plane integrity protection for the connection.

Specifically, when the first terminal device obtains the indication information #1, if a value of a control plane integrity protection policy included in the control plane security protection policy #1 is REQUIRED, and the integrity protection rate that can be supported by the first terminal device does not support enabling of control plane integrity protection, the first terminal device determines to disable control plane integrity protection for the connection; or if a value of a user plane integrity protection policy included in the user plane security protection policy #1 is REQUIRED, and the integrity protection rate that can be supported by the first terminal device does not support enabling of user plane integrity protection, the first terminal device determines to disable user plane integrity protection for the connection.

In still another example, the first terminal device determines, based on the indication information #1, the security protection policy #1, and a security protection policy #2 (an example of a second security protection policy), whether to enable security protection for the connection.

The security protection policy #2 is a security protection policy used by the second terminal device in the first service, and the security protection policy #2 is sent by the second terminal device to the first terminal device. For example, in the process of establishing the connection, the second terminal device sends a DCR message to the first terminal device, where the DCR message includes the security protection policy #2. Specifically, the DCR message includes a control plane security protection policy #2 and/or a user plane security protection policy #2. For another example, in the process of establishing the connection, the second terminal device sends a DSM complete message to the first terminal device, where the DSM complete message includes the security protection policy #2. Specifically, the DSM complete message includes a control plane security protection policy #2 and/or a user plane security protection policy #2.

For example, when the first terminal device obtains the indication information #1, the first terminal device determines, according to a security protection policy with a higher security level in the security protection policy #1 and the security protection policy #2, whether to enable security protection for the connection. Security levels of the security protection policy in descending order are as follows: The security protection policy is that security protection needs to be enabled, the security protection policy is that security protection may be enabled or may be disabled, and the security protection policy is that security protection does not need to be enabled.

For example, when the first terminal device obtains the indication information #1, if the control plane security protection policy #1 and/or the user plane security protection policy #1 included in the security protection policy #1 are/is that security protection does not need to be enabled, and the control plane security protection policy #2 and/or the user plane security protection policy #2 included in the security protection policy #2 are/is that security protection needs to be enabled, the first terminal device determines that a security level of the security protection policy #2 is higher, and the first terminal device determines, based on the security protection policy #2, to enable control plane security protection and/or user plane security protection for the connection. For another example, if the control plane security protection policy #1 and/or the user plane security protection policy #1 included in the security protection policy #1 are/is that security protection needs to be enabled, and the control plane security protection policy #2 and/or the user plane security protection policy #2 included in the security protection policy #2 are/is that security protection does not need to be enabled, the first terminal device determines that a security level of the security protection policy #1 is higher, and the first terminal device determines, based on the security protection policy #1, to enable control plane security protection and/or user plane security protection for the connection. For another example, if the control plane security protection policy #1 and/or the user plane security protection policy #1 included in the security protection policy #1 are/is that security protection needs to be enabled, and the control plane security protection policy #2 and/or the user plane security protection policy #2 included in the security protection policy #2 are/is that security protection may be enabled or may be disabled, the first terminal device determines that a security level of the security protection policy #1 is higher, and the first terminal device determines, based on the security protection policy #1, to enable control plane security protection and/or user plane security protection for the connection.

In another possible implementation, the first identifier is the new security protection policy. Correspondingly, the first terminal device determines, according to the new security protection policy, whether to enable security protection for the connection. The first terminal device determines, according to the new security protection policy, whether to enable security protection for the connection, so that processing logic of the first terminal device is simpler, and processing efficiency of the first terminal device is improved.

For example, if the first terminal device obtains the first identifier, where the first identifier is a new security protection policy, and the new security protection policy is that security protection needs to be enabled, the first terminal device determines to enable security protection for the connection.

Specifically, the first terminal device obtains the first identifier, where the first identifier is a new security protection policy. If a control plane security protection policy included in the new security protection policy is that security protection needs to be enabled, the first terminal device determines to enable control plane security protection for the connection. If a user plane security protection policy included in the new security protection policy is that security protection needs to be enabled, the first terminal device determines to enable user plane security protection for the connection.

More specifically, the first terminal device obtains the first identifier, where the first identifier is a new security protection policy. If a value of a control plane confidentiality protection policy included in the new security protection policy is REQUIRED, the first terminal device determines to enable control plane confidentiality protection for the connection; if a value of a control plane integrity protection policy included in the new security protection policy is REQUIRED, the first terminal device determines to enable control plane integrity protection for the connection; if a value of a user plane confidentiality protection policy included in the new security protection policy is REQUIRED, the first terminal device determines to enable user plane confidentiality protection for the connection; or if a value of a user plane integrity protection policy included in the new security protection policy is REQUIRED, the first terminal device determines to enable user plane integrity protection for the connection.

For another example, if the first terminal device obtains the first identifier, where the first identifier is a new security protection policy, and the new security protection policy is that security protection does not need to be enabled, the first terminal device determines to disable security protection for the connection.

Specifically, the first terminal device obtains the first identifier, where the first identifier is a new security protection policy. If a control plane security protection policy included in the new security protection policy is that security protection does not need to be enabled, the first terminal device determines to disable control plane security protection for the connection. If a user plane security protection policy included in the new security protection policy is that security protection does not need to be enabled, the first terminal device determines to disable user plane security protection for the connection.

More specifically, the first terminal device obtains the first identifier, where the first identifier is a new security protection policy. If a value of a control plane confidentiality protection policy included in the new security protection policy is NOT NEEDED, the first terminal device determines to disable control plane confidentiality protection for the connection; if a value of a control plane integrity protection policy included in the new security protection policy is NOT NEEDED, the first terminal device determines to disable control plane integrity protection for the connection; if a value of a user plane confidentiality protection policy included in the new security protection policy is NOT NEEDED, the first terminal device determines to disable user plane confidentiality protection for the connection; or if a value of a user plane integrity protection policy included in the new security protection policy is NOT NEEDED, the first terminal device determines to disable user plane integrity protection for the connection.

For still another example, if the first terminal device obtains the first identifier, where the first identifier is a new security protection policy, and the new security protection policy is that security protection may be enabled or may be disabled, the first terminal device may determine to enable security protection for the connection or determine to disable security protection for the connection. For example, the first terminal device determines, based on a security protection requirement of the local end, whether to enable security protection for the connection. If the security protection requirement of the first terminal device is that security protection is enabled, the first terminal device determines to enable security protection for the connection; or if the security protection requirement of the first terminal device is that security protection is disabled, the first terminal device determines to disable security protection for the connection.

Specifically, the first terminal device obtains the first identifier, where the first identifier is a new security protection policy. If a control plane security protection policy included in the new security protection policy is that security protection may be enabled or may be disabled, the first terminal device may determine to enable control plane security protection for the connection or determine to disable control plane security protection for the connection. If a user plane security protection policy included in the new security protection policy is that security protection may be enabled or may be disabled, the first terminal device may determine to enable user plane security protection for the connection or determine to disable user plane security protection for the connection.

More specifically, the first terminal device obtains the first identifier, where the first identifier is a new security protection policy. If a value of a control plane confidentiality protection policy included in the new security protection policy is PREFERRED, the first terminal device may determine to enable control plane security protection for the connection or determine to disable control plane security protection for the connection; if a value of a control plane integrity protection policy included in the new security protection policy is PREFERRED, the first terminal device may determine to enable control plane security protection for the connection or determine to disable control plane security protection for the connection; if a value of a user plane confidentiality protection policy included in the new security protection policy is PREFERRED, the first terminal device may determine to enable user plane security protection for the connection or determine to disable user plane security protection for the connection; or if a value of a user plane integrity protection policy included in the new security protection policy is PREFERRED, the first terminal device may determine to enable user plane security protection for the connection or determine to disable user plane security protection for the connection.

It should be understood that this embodiment of this application does not limit whether the values of the control plane security protection policy and the user plane security protection policy included in the new security protection policy are the same, does not limit whether the values of the control plane confidentiality protection policy and the control plane integrity protection policy included in the new security protection policy are the same, and does not determine whether the values of the user plane confidentiality protection policy and the user plane integrity protection policy included in the new security protection policy are the same.

In still another possible implementation, the first identifier is the new security protection enabling manner. Correspondingly, the first terminal device determines, based on the new security protection enabling manner, whether to enable security protection for the connection. The first terminal device determines, based on the new security protection enabling manner, whether to enable security protection for the connection, so that processing logic of the first terminal device is simpler, and processing efficiency of the first terminal device is improved.

For example, if the first terminal device obtains the first identifier, where the first identifier is a new security protection enabling manner, and the new security protection enabling manner is that security protection is enabled, the first terminal device determines to enable security protection for the single connection.

Specifically, the first terminal device obtains the first identifier, where the first identifier is a new security protection enabling manner. If a control plane security protection enabling manner included in the new security protection enabling manner is that security protection is enabled, the first terminal device determines to enable control plane security protection for the connection. If a user plane security protection enabling manner included in the new security protection enabling manner is that security protection is enabled, the first terminal device determines to enable user plane security protection for the connection.

More specifically, the first terminal device obtains the first identifier, where the first identifier is a new security protection enabling manner. If a control plane confidentiality protection enabling manner included in the new security protection enabling manner is that confidentiality protection is enabled, the first terminal device determines to enable control plane confidentiality protection for the connection; if a control plane integrity protection enabling manner included in the new security protection enabling manner is that integrity protection is enabled, the first terminal device determines to enable control plane integrity protection for the connection; if a user plane confidentiality protection enabling manner included in the new security protection enabling manner is that confidentiality protection is enabled, the first terminal device determines to enable user plane confidentiality protection for the connection; or if a user plane integrity protection enabling manner included in the new security protection enabling manner is that integrity protection is enabled, the first terminal device determines to enable user plane integrity protection for the connection.

For another example, if the first terminal device obtains the first identifier, where the first identifier is a new security protection enabling manner, and the new security protection enabling manner is that security protection is disabled, the first terminal device determines to disable security protection for the connection.

Specifically, the first terminal device obtains the first identifier, where the first identifier is a new security protection enabling manner. If a control plane security protection enabling manner included in the new security protection enabling manner is that security protection is disabled, the first terminal device determines to disable control plane security protection for the connection. If a user plane security protection enabling manner included in the new security protection enabling manner is that security protection is disabled, the first terminal device determines to disable user plane security protection for the connection.

More specifically, the first terminal device obtains the first identifier, where the first identifier is a new security protection enabling manner. If a control plane confidentiality protection enabling manner included in the new security protection enabling manner is that confidentiality protection is disabled, the first terminal device determines to disable control plane confidentiality protection for the connection; if a control plane integrity protection enabling manner included in the new security protection enabling manner is that integrity protection is disabled, the first terminal device determines to disable control plane integrity protection for the connection; if a user plane confidentiality protection enabling manner included in the new security protection enabling manner is that confidentiality protection is disabled, the first terminal device determines to disable user plane confidentiality protection for the connection; or if a user plane integrity protection enabling manner included in the new security protection enabling manner that integrity protection is disabled, the first terminal device determines to disable user plane integrity protection for the connection.

It should be understood that this embodiment of this application does not limit whether the control plane security protection enabling manner and the user plane security protection enabling manner included in the new security protection enabling manner are the same, does not limit whether the control plane confidentiality protection enabling manner and the control plane integrity protection enabling manner included in the new security protection enabling manner are the same, and does not determine whether the user plane confidentiality protection enabling manner and the user plane integrity protection enabling manner included in the new security protection enabling manner are the same.

In still another possible implementation, the first identifier is the new security protection enabling manner and the new security protection policy. Correspondingly, the first terminal device determines, based on the new security protection enabling manner or the new security protection policy, whether to enable security protection for the connection.

In still another possible implementation, the first identifier is the indication information #1 and the new security protection policy. Correspondingly, the first terminal device determines, based on the indication information #1 and/or according to the new security protection policy, whether to enable security protection for the connection.

In still another possible implementation, the first identifier is the indication information #1 and the new security protection enabling manner. Correspondingly, the first terminal device determines, based on the indication information #1 and/or the new security protection enabling manner, whether to enable security protection for the connection.

In still another possible implementation, the first identifier is the indication information #1, the new security protection policy, and the new security protection enabling manner. Correspondingly, the first terminal device determines, based on the indication information #1 and the new security protection enabling manner and according to the new security protection policy, whether to enable security protection for the connection.

In still another possible implementation, if the first identifier indicates the security protection enabling manner used by the terminal device, the first terminal device determines, based on the first identifier, whether to enable security protection for the connection. Specifically, reference may be made to the method for determining, by the first terminal device based on the new security protection enabling manner, whether to enable security protection for the connection. The first terminal device determines, based on the first identifier, whether to enable security protection for the connection, so that processing logic of the first terminal device is simpler, and processing efficiency of the first terminal device is improved.

As described above, when the first terminal device determines, based on the first identifier, whether to enable security protection for the connection, the first terminal device may not consider the security protection policy #1 and/or the security protection policy #2. Therefore, the security protection enabling manner, for the connection, determined by the first terminal device may not match the security protection policy #1 and/or the security protection policy #2. Therefore, that the first identifier is used to modify the security protection policy of the terminal device may be understood as that the security protection enabling manner may not be determined according to the security protection policy configured by the policy control function network element for the terminal device, but the security protection enabling manner is determined based on the first identifier.

Optionally, before S320, the method 300 further includes: The first terminal device determines whether the security protection policy #1 matches the security protection policy #2.

That the security protection policy #1 matches the security protection policy #2 may be: a value of the security protection policy #1 is REQUIRED, and a value of the security protection policy #2 is not NOT NEEDED; a value of the security protection policy #1 is NOT NEEDED, and a value of the security protection policy #2 is not REQUIRED; both values of the security protection policy #1 and the security protection policy #2 are PREFERRED; a value of the security protection policy #2 is REQUIRED, and a value of the security protection policy #1 is not NOT NEEDED; or a value of the security protection policy #2 is NOT NEEDED, and a value of the security protection policy #1 is not REQUIRED.

That the security protection policy #1 does not match the security protection policy #2 may be: a value of the security protection policy #1 is NOT NEEDED, and a value of the security protection policy #2 is REQUIRED; or a value of the security protection policy #1 is REQUIRED, and a value of the security protection policy #2 is NOT NEEDED. Further, when determining that the security protection policy #1 does not match the security protection policy #2, the first terminal device determines, based on the first identifier, whether to enable security protection for the connection.

As described in S320, when the first terminal device determines, based on the first identifier, whether to enable security protection for the connection, a connection establishment failure caused by mismatch of the security protection policies between the first terminal device and the second terminal device can be prevented, so that signaling of the discovery procedure before the connection establishment procedure cannot be further wasted, thereby not affecting network resource efficiency and service interworking.

Optionally, before S320, the method 300 further includes: The first terminal device determines whether the second terminal device supports forcible modification of the security protection policy.

In a possible implementation, that the first terminal device determines whether the second terminal device supports forcible modification of the security protection policy includes: The first terminal device receives a service discovery parameter from the second terminal device in a discovery procedure of the first service; and the first terminal device determines, based on the service discovery parameter, whether the second terminal device supports forcible modification of the security protection policy. Specifically, if the service discovery parameter corresponds to the first identifier, the first terminal device determines that the second terminal device supports forcible modification of the security protection policy; or if the service discovery parameter does not correspond to the first identifier, the first terminal device determines that the second terminal device does not support forcible modification of the security protection policy.

It may be understood that in this implementation, the first terminal device and the second terminal device may obtain the service discovery parameter and the first identifier in advance, and there is a correspondence between the service discovery parameter and the first identifier. A form of the correspondence between the service discovery parameter and the first identifier may be that the first identifier is carried in the service discovery parameter, or may be a mapping relationship of [service discovery parameter, first identifier]. The following describes, with reference to the method 500, how the terminal device obtains the service discovery parameter and the first identifier.

For the second terminal device, if the second terminal device obtains a service discovery parameter corresponding to the first identifier in advance, and the second terminal device supports forcible modification of the security protection policy, in the discovery procedure of the first service, the second terminal device sends the service discovery parameter that has the correspondence with the first identifier. If the second terminal device does not support forcible modification of the security protection policy, in the discovery procedure of the first service, the second terminal device sends a service discovery parameter that has no correspondence with the first identifier.

For example, the service discovery parameter is service discovery code (code).

In another possible implementation, that the first terminal device determines whether the second terminal device supports forcible modification of the security protection policy includes: The first terminal device receives a first message from the second terminal device in a process of establishing the connection; and the first terminal device determines, based on the first message, whether the second terminal device supports forcible modification of the security protection policy. Specifically, if the first message includes the first identifier, the first terminal device determines that the second terminal device supports forcible modification of the security protection policy; or if the first message does not include the first identifier, the first terminal device determines that the second terminal device does not support forcible modification of the security protection policy.

For the second terminal device, if the second terminal device supports forcible modification of the security protection policy, the second terminal device carries the first identifier in the first message; or if the second terminal device does not support forcible modification of the security protection policy, the second terminal device does not carry the first identifier in the first message.

For example, the first message is a DCR message, or the first message is a DSM complete message.

Further, when determining that the second terminal device supports forcible modification of the security protection policy, the first terminal device determines, based on the first identifier, whether to enable security protection for the connection. S330: The first terminal device sends the first information. Correspondingly, in S330, the second terminal device receives the first information. The first information indicates whether to enable security protection for the connection.

For example, the first information includes a security protection algorithm. If the security protection algorithm is a null algorithm, it indicates that security protection of the connection is disabled; or if the security protection algorithm is a non-null algorithm, it indicates that security protection of the connection is enabled.

Optionally, if the first information further includes the first identifier, it indicates that the security protection enabling manner for the connection is determined based on the first identifier.

For example, the first information is a DSM command message, or the first information is a DCA message. For example, after receiving the DCR message from the second terminal device, the first terminal device determines, based on the first identifier, whether to enable control plane security protection for the connection, and sends the DSM command message to the second terminal device, where the DSM command message indicates whether to enable control plane security protection for the connection. Further, after receiving the DSM complete message from the second terminal device, the first terminal device determines, based on the first identifier, whether to enable user plane security protection for the connection, and sends the DCA message to the second terminal device, where the DCA message indicates whether to enable user plane security protection for the connection.

S340: The second terminal device determines, based on the first information, whether to enable security protection for the connection.

Specifically, if the first information indicates to enable security protection for the connection, the second terminal device enables security protection for the connection; or if the first information indicates to disable security protection for the connection, the second terminal device disables security protection for the connection.

Optionally, if the second terminal device obtains the first identifier in advance, that is, it indicates that the second terminal device supports forcible modification of the security protection policy, the second terminal device does not perform a security protection policy matching check. In other words, the second terminal device does not check whether the security protection enabling manner, for the connection, determined based on the first information meets the security protection policy #2.

Optionally, if the second terminal device obtains the first identifier in advance, and in the process of establishing the connection, the second terminal device carries the first identifier in the first message, that is, it indicates that the second terminal device supports forcible modification of the security protection policy, the second terminal device does not perform a security protection policy matching check. In other words, the second terminal device does not check whether the security protection enabling manner, for the connection, determined based on the first information meets the security protection policy #2. For example, the first message is a DCR message, or the first message is a DSM complete message.

Optionally, if the first information includes the first identifier, the second terminal device determines, based on the first identifier, that the security protection enabling manner for the connection is determined based on the first identifier. Further, if the second terminal device supports forcible modification of the security protection policy, whether to enable security protection for the connection is determined based on the first information.

In this embodiment of this application, in the process in which the first terminal device establishes the connection to the second terminal device for the first service, the first terminal device may determine, based on the first identifier, whether to enable security protection for the connection, instead of determining, according to security protection policies of the two terminal devices, whether to enable security protection for the connection. This can avoid a case in which whether to enable security protection for the connection cannot be successfully determined when the security protection policies of the two terminal devices do not match, and can further avoid a signaling waste caused by a connection establishment failure.

In addition, when the first terminal device determines, based on the first identifier, whether to enable security protection for the connection, the first terminal device may not check whether the security protection enabling manner for the connection matches the security protection policy of the local end, or the first terminal device may not check whether the security protection policy of the second terminal device matches the security protection policy of the local end, so that processing resources of the terminal device can be saved. When the second terminal device determines, based on the first identifier, whether to enable security protection for the connection, the second terminal device may not check whether the security protection enabling manner for the connection matches the security protection policy of the local end, so that processing resources of the terminal device can be saved.

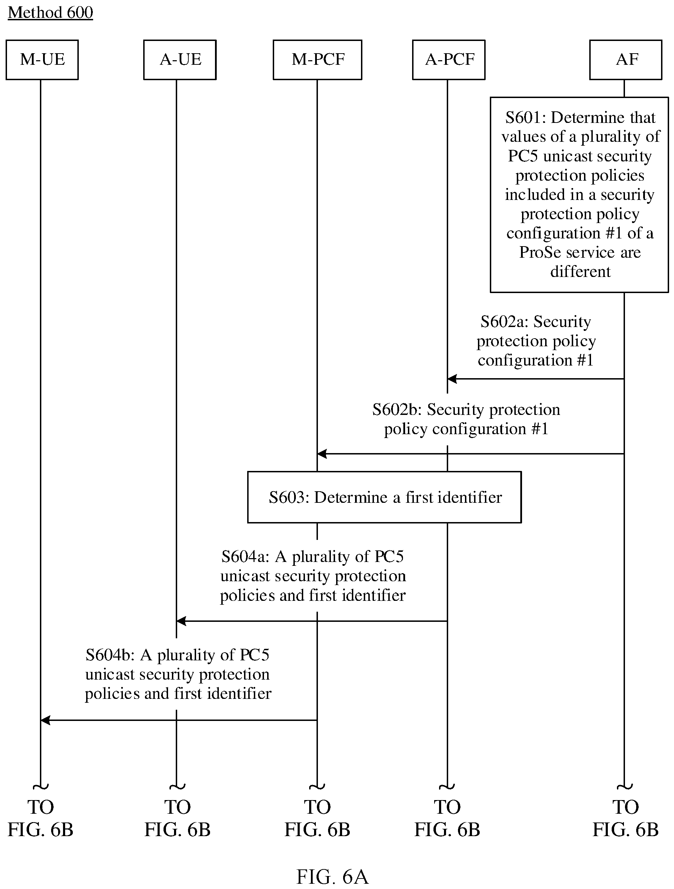

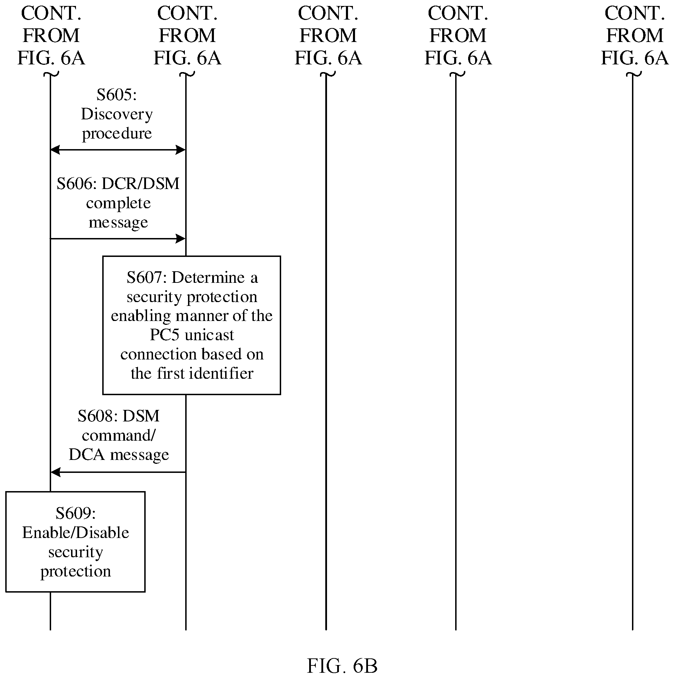

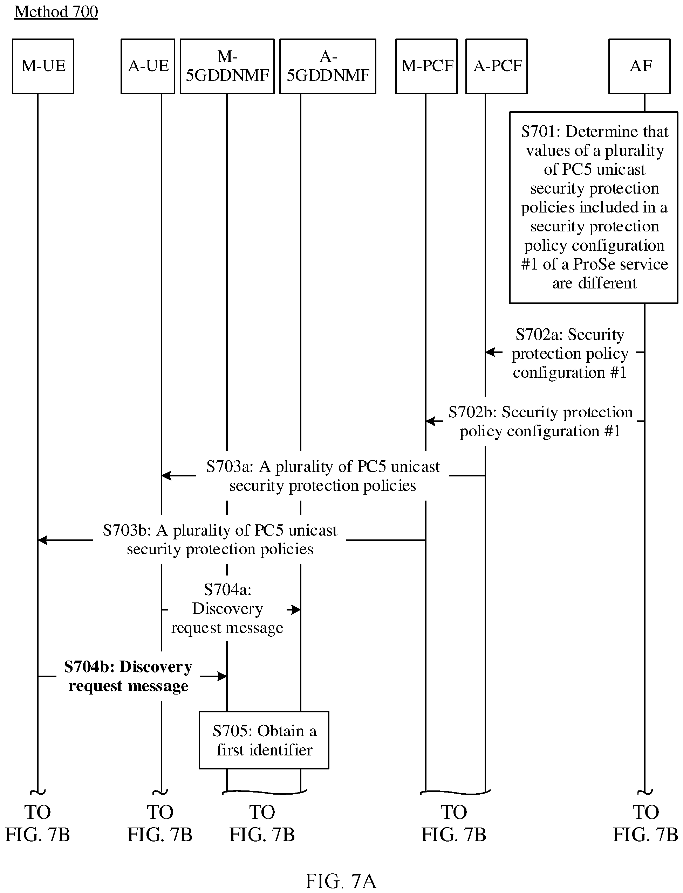

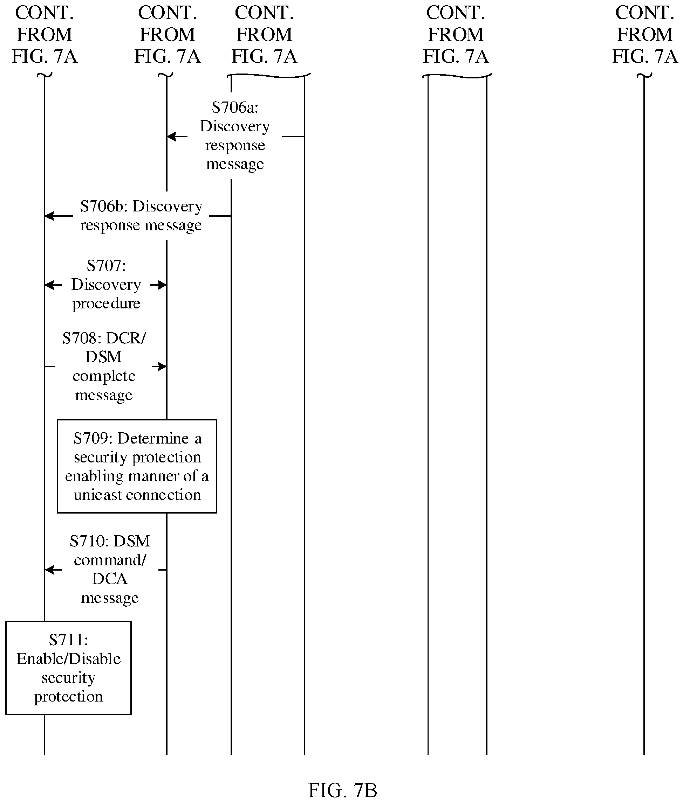

The method in FIG. 3 is described in detail below with reference to specific embodiments FIG. 4 to FIG. 7A and FIG. 7B. With reference to FIG. 4 and FIG. 5, the method for receiving, by the terminal device, the first identifier from the core network element is described. With reference to FIG. 6A, FIG. 6B, FIG. 7A and FIG. 7B, the method in FIG. 3 is described in detail by using an example in which the first service is a ProSe service and the connection of the first service is a PC5 unicast connection.

FIG. 4 is a schematic flowchart of a communication method according to an embodiment of this application. As shown in FIG. 4, the method 400 may include S410 to S450. The following describes the steps in detail. It should be understood that, in FIG. 4, an example in which the core network element is a policy control function network element is used to describe the method for receiving the first identifier by the terminal device from the core network element.

S410: An application function network element determines that values of a plurality of security protection policies included in a security protection policy configuration #1 of a first service are different, where the plurality of security protection policies include security protection policies of connections of the first service at different geographical locations.

Specifically, the application function network element determines the security protection policy configuration #1 of the first service based on an application requirement, where the security protection policy configuration #1 of the first service includes the plurality of security protection policies, and the plurality of security protection policies correspond to control plane security protection policies and/or user plane security protection policies of the connections of the first service at the different geographical locations. It should be noted that the security protection policy includes a confidentiality protection policy and/or an integrity protection policy. For example, the control plane security protection policy includes a control plane confidentiality protection policy and/or a control plane integrity protection policy, and the user plane security protection policy includes a user plane confidentiality protection policy and/or a user plane integrity protection policy. For example, the security protection policy configuration #1 of the first service is shown in Table 1. It is assumed that the security protection policy configuration #1 of the first service includes three security protection policies, and the three security protection policies respectively correspond to three geographical locations. At a geographical location #A, the security protection policy of the connection of the first service is a security protection policy #A. At a geographical location #B, the security protection policy of the connection of the first service is a security protection policy #B. At the geographical location #C, the security protection policy of the connection of the first service is a security protection policy #C.

**Table 1**

| Geographical location | Security protection policy |
|---|---|
| Geographical location #A | Security protection policy #A |
| Geographical location #B | Security protection policy #B |
| Geographical location #C | Security protection policy #C |

For another example, the security protection policy configuration #1 of the first service is shown in Table 2. It is assumed that the security protection policy configuration #1 of the first service includes two security protection policies, and the two security protection policies correspond to three geographical locations. At a geographical location #A, the security protection policy of the connection of the first service is a security protection policy #A. At a geographical location #B and a geographical location #C, the security protection policy of the connection of the first service is a security protection policy #B.

**Table 2**

| Geographical location | Security protection policy |
|---|---|
| Geographical location #A | Security protection policy #A |
| Geographical location #B | Security protection policy #B |
| Geographical location #C | |

Further, the application function network element determines whether values of the plurality of security protection policies are the same. If the values of the plurality of security protection policies are different, the application function network element generates indication information #2 (an example of second indication information). The indication information #2 indicates that the security protection policy of the first service may be forcibly modified during connection establishment. Alternatively, the indication information #2 indicates that the security protection policy of the first service may be forcibly modified during connection establishment, and when the security protection policy of the first service is forcibly modified during connection establishment, all terminal devices that use the first service use a same security protection policy. Alternatively, the indication information #2 indicates that the security protection policy of the first service may be forcibly modified during connection establishment, and when the security protection policy of the first service is forcibly modified during connection establishment, all terminal devices that use the first service use a same security protection enabling manner. For example, the indication information #2 may be named as a security protection policy forcible modification indication. For example, the first identifier may be denoted as an "overrule indication" or an "overwrite indication".

As described above, the plurality of security protection policies included in the security protection policy configuration #1 of the first service correspond to the different geographical locations. If values of the plurality of security protection policies are different, it indicates that the security protection policies of the connections of the first service at the different geographical locations are different. For terminal devices at the different geographical locations, different security protection policies may be used in the connections of the first service. For example, the security protection policy configuration #1 of the first service is shown in Table 1. If values of the security protection policy #A and the security protection policy #B are different, a terminal device #A at the geographical location #A and a terminal device #B at the geographical location #B may use different security protection policies in the connections of the first service.

That the values of the plurality of security protection policies are different includes: values of any two of the plurality of security protection policies are different, or values of at least two of the plurality of security protection policies are different.

As described above, the security protection policy includes a control plane security protection policy and/or a user plane security protection policy. That the values of the two security protection policies are different includes: control plane security protection policies and/or user plane security protection policies respectively included in the two security protection policies are different. For example, that the values of the two security protection policies are different includes: values of control plane security protection policies included in the two security protection policies are different; values of user plane security protection policies included in the two security protection policies are different; or values of control plane security protection policies included in the two security protection policies are different and values of user plane security protection policies included in the two security protection policies are different.

Further, that the two control plane security protection policies are different includes: control plane confidentiality protection policies and/or control plane integrity protection policies respectively included in the two control plane security protection policies are different. For example, that the values of the two control plane security protection policies are different includes: values of control plane confidentiality protection policies included in the two control plane security protection policies are different; values of control plane integrity protection policies included in the two control plane security protection policies are different; or values of control plane integrity protection policies included in the two control plane security protection policies are different and values of control plane integrity protection policies included in the two control plane security protection policies are different.

That the two user plane security protection policies are different includes: user plane confidentiality protection policies and/or user plane integrity protection policies respectively included in the two user plane security protection policies are different. For example, that the values of the two user plane security protection policies are different includes: values of user plane confidentiality protection policies included in the two user plane security protection policies are different; values of user plane integrity protection policies included in the two user plane security protection policies are different; or values of user plane integrity protection policies included in the two user plane security protection policies are different and values of user plane integrity protection policies included in the two user plane security protection policies are different.

Optionally, the application function network element may generate the indication information #2 by default. In other words, regardless of whether the values of the plurality of security protection policies included in the security protection policy configuration #1 of the first service are the same, the application function network element generates the indication information #2. In addition, before generating the indication information #2, the application function network element may not determine whether the values of the plurality of security protection policies are the same.

Optionally, before S410, the method 400 further includes S430: The application function network element receives a request message #1 (an example of a first request message). The request message #1 is used to request the indication information #2. After receiving the request message #1, the application function network element generates the indication information #2 based on the request message #1. For example, the request message #1 is sent by the policy control function network element to the application function network element by using a network exposure function network element. For another example, the request message #1 is directly sent by the policy control function network element to the application function network element.

S420: The application function network element sends the indication information #2. Correspondingly, in S420, the policy control function network element (an example of a first core network element) receives the indication information #2.

The policy control function network element provides a service for the first terminal device and/or the second terminal device in the method 300.

For example, the application function network element sends the indication information #2 to the network exposure function network element, then the network exposure function network element sends the indication information #2 to a unified data warehouse network element, and then the unified data warehouse network element sends the indication information #2 to the policy control function network element.

For another example, the application function network element directly sends the indication information #2 to the policy control function network element.

Optionally, before S420, the method 400 further includes S430: The policy control function network element sends a request message #1 to the application function network element, where the request message #1 is used to request to obtain the indication information #2. Correspondingly, after receiving the request message #1, the application function network element sends the indication information #2 to the policy control function network element.

Optionally, when determining that values of a plurality of security protection policies included in a security protection policy configuration of the first service are different, the policy control function network element sends the request message #1 to the application function network element. For meanings of the different values of the plurality of security protection policies included in the security protection policy configuration, refer to the description in S410.

The security protection policy configuration of the first service is determined based on the security protection policy configuration #1, of the first service, obtained from the application function network element. It should be noted that the determining, based on the security protection policy configuration #1, of the first service, obtained from the application function network element, the security protection policy configuration of the first service may be performed by the network exposure function network element, or may be performed by another core network element, for example, a policy function control network element. It should be understood that the plurality of security protection policies included in the security protection policy configuration #1 are the same as security protection requirements of the plurality of security protection policies included in the security protection policy configuration, and a difference lies in that names of the values of the security protection policies may be different or may be the same. For example, both the security protection policy #A included in the security protection policy configuration #1 and a security protection policy #A included in the security protection policy configuration are security enabling required, a value of the security protection policy #A included in the security protection policy configuration is REQUIRED, and a value of the security protection policy #A included in the security protection policy configuration #1 may not be REQUIRED.

S440: The policy control function network element determines the first identifier based on the security protection policy configuration of the first service and the indication information #2.

The security protection policy configuration of the first service is determined based on the security protection policy configuration #1, of the first service, obtained from the application function network element. It should be noted that the determining, based on the security protection policy configuration #1, of the first service, obtained from the application function network element, the security protection policy configuration of the first service may be performed by the network exposure function network element, or may be performed by another core network element, for example, a policy function control network element.

The first identifier is used to modify a security protection policy of the terminal device. Specifically, the first identifier is used to modify the security protection policy used by the terminal device in the first service, and the security protection policy used by the terminal device in the first service is configured by the policy control function network element for the terminal device.

For example, the first identifier is one or more of the following: a new security protection policy, a new security protection enabling manner, and indication information #1.

The new security protection policy is a security protection policy determined by the policy control function network element based on the security protection policy configuration of the first service and the indication information #2. The new security protection policy may be the same as a security protection policy included in the security protection policy configuration, or may be different from a security protection policy included in the security protection policy configuration. This is not limited in embodiments of this application. Because the first identifier is used to modify the security protection policy of the terminal device, the new security protection policy may be considered as a security protection policy used when the security protection policy of the terminal device is modified.

The new security protection enabling manner is a security protection enabling manner determined by the policy control function network element based on the security protection policy configuration of the first service and the indication information #2. The new security protection enabling manner may match a security protection policy included in the security protection policy configuration, or may not match a security protection policy included in the security protection policy configuration. This is not limited in embodiments of this application. That the security protection enabling manner matches the security protection policy may be: The security protection enabling manner is that security protection is enabled, and a value of the security protection policy is not NOT NEEDED; or the security protection enabling manner is that security protection is disabled, and a value of the security protection policy is not REQUIRED. That the security protection enabling manner does not match the security protection policy may be: The security protection enabling manner is that security protection is enabled, and a value of the security protection policy is NOT NEEDED; or the security protection enabling manner is that security protection is disabled, and a value of the security protection policy is REQUIRED. Because the first identifier is used to modify the security protection policy of the terminal device, the new security protection enabling manner may be considered as a security protection enabling manner used when the security protection policy of the terminal device is modified.

The indication information #1 indicates that the security protection policy of the terminal device is allowed to be forcibly modified. Specifically, the indication information #1 indicates that the security protection policy of the terminal device is allowed to be forcibly modified in a process of establishing a connection of the first service. Alternatively, the indication information #1 indicates that the security protection policy used by the terminal device in the first service is allowed to be forcibly modified.

Optionally, the first identifier may further indicate the security protection enabling manner used by the terminal device, and is not used to modify the security protection policy of the terminal device. Specifically, the first identifier indicates a security protection enabling manner used by the terminal device in the first service.

In a possible implementation, once receiving the indication information #2, the policy control function network element determines the first identifier based on the security protection policy configuration of the first service and the indication information #2.

In another possible implementation, when determining that the values of the plurality of security protection policies included in the security protection policy configuration of the first service are different, the policy control function network element determines the first identifier based on the security protection policy configuration and the indication information #2. Specifically, for meanings of the plurality of security protection policies and meanings of the different values of the plurality of security protection policies, refer to descriptions in S410.

The following describes in detail a manner in which the policy control function network element determines the first identifier.

For example, the policy control function network element determines the first identifier based on the security protection policy configuration and the indication information #2 in the following several manners:

### Manner 1

If the indication information #2 further indicates that security protection needs to be enabled when the security protection policy of the first service is forcibly modified during connection establishment, the policy control function network element determines, based on the indication information #2, that the first identifier is a new security protection policy, and a value of the new security protection policy is REQUIRED.

Specifically, if the indication information #2 further indicates that control plane security protection needs to be enabled, a value of a control plane security protection policy included in the new security protection policy is REQUIRED; or if the indication information #2 further indicates that user plane security protection needs to be enabled, a value of a user plane security protection policy included in the new security protection policy is REQUIRED.

More specifically, if the indication information #2 further indicates that control plane confidentiality protection needs to be enabled, a value of a control plane confidentiality protection policy included in the new security protection policy is REQUIRED; if the indication information #2 further indicates that control plane integrity protection needs to be enabled, a value of a control plane integrity protection policy included in the new security protection policy is REQUIRED; if the indication information #2 further indicates that user plane confidentiality protection needs to be enabled, a value of a user plane confidentiality protection policy included in the new security protection policy is REQUIRED; or if the indication information #2 further indicates that user plane integrity protection needs to be enabled, a value of a user plane integrity protection policy included in the new security protection policy is REQUIRED.

If the indication information #2 further indicates that security protection does not need to be enabled when the security protection policy of the first service is forcibly modified during connection establishment, the policy control function network element determines, based on the indication information #2, that the first identifier is a new security protection policy, and a value of the new security protection policy is NOT NEEDED.

Specifically, if the indication information #2 further indicates that control plane security protection does not need to be enabled, a value of a control plane security protection policy included in the new security protection policy is NOT NEEDED; or if the indication information #2 further indicates that user plane security protection does not need to be enabled, a value of a user plane security protection policy included in the new security protection policy is NOT NEEDED.

More specifically, if the indication information #2 further indicates that control plane confidentiality protection does not need to be enabled, a value of a control plane confidentiality protection policy included in the new security protection policy is NOT NEEDED; if the indication information #2 further indicates that control plane integrity protection does not need to be enabled, a value of a control plane integrity protection policy included in the new security protection policy is NOT NEEDED; if the indication information #2 further indicates that user plane confidentiality protection does not need to be enabled, a value of a user plane confidentiality protection policy included in the new security protection policy is NOT NEEDED; or if the indication information #2 further indicates that user plane integrity protection does not need to be enabled, a value of a user plane integrity protection policy included in the new security protection policy is NOT NEEDED.

### Manner 2

If the indication information #2 further indicates that security protection needs to be enabled when the security protection policy of the first service is forcibly modified during connection establishment, the policy control network element determines, based on the indication information #2, that the first identifier is a new security protection enabling manner, and the new security protection enabling manner is that security protection is enabled.

Specifically, if the indication information #2 further indicates that control plane security protection needs to be enabled, a control plane security protection enabling manner included in the new security protection enabling manner is that security protection is enabled; or if the indication information #2 further indicates that user plane security protection needs to be enabled, a user plane security protection enabling manner included in the new security protection enabling manner is that security protection is enabled.

More specifically, if the indication information #2 further indicates that control plane confidentiality protection needs to be enabled, a control plane confidentiality protection enabling manner included in the new security protection enabling manner is that confidentiality protection is enabled; if the indication information #2 further indicates that control plane integrity protection needs to be enabled, a control plane integrity protection enabling manner included in the new security protection enabling manner is that integrity protection is enabled; if the indication information #2 further indicates that user plane confidentiality protection needs to be enabled, a user plane confidentiality protection enabling manner included in the new security protection enabling manner is that confidentiality protection is enabled; or if the indication information #2 further indicates that user plane integrity protection needs to be enabled, a user plane integrity protection enabling manner included in the new security protection enabling manner is that integrity protection is enabled.

If the indication information #2 further indicates that security protection does not need to be enabled when the security protection policy of the first service is forcibly modified during connection establishment, the policy control function network element determines, based on the indication information #2, that the first identifier is a new security protection enabling manner, and the new security protection enabling manner is that security protection is disabled.

Specifically, if the indication information #2 further indicates that control plane security protection does not need to be enabled, a control plane security protection enabling manner included in the new security protection enabling manner is that security protection is disabled; or if the indication information #2 further indicates that user plane security protection does not need to be enabled, a user plane security protection enabling manner included in the new security protection enabling manner is that security protection is disabled.

More specifically, if the indication information #2 further indicates that control plane confidentiality protection does not need to be enabled, a control plane confidentiality protection enabling manner included in the new security protection enabling manner is that confidentiality protection is disabled; if the indication information #2 further indicates that control plane integrity protection does not need to be enabled, a control plane integrity protection enabling manner included in the new security protection enabling manner is that integrity protection is disabled; if the indication information #2 further indicates that user plane confidentiality protection does not need to be enabled, a user plane confidentiality protection enabling manner included in the new security protection enabling manner is that confidentiality protection is disabled; or if the indication information #2 further indicates that user plane integrity protection does not need to be enabled, a user plane integrity protection enabling manner included in the new security protection enabling manner is that integrity protection is disabled.

Optionally, in Manner 2, the first identifier determined by the policy control function network element indicates the security protection enabling manner used by the terminal device, and is not used to modify the security protection policy of the terminal device. Specifically, the security protection enabling manner that is used by the terminal device and that is indicated by the first identifier is the same as the foregoing new security protection enabling manner. Details are not described herein again.

### Manner 3

If the indication information #2 indicates that the security protection policy of the first service may be forcibly modified during connection establishment, or the indication information #2 indicates that all terminal devices that use the first service use a same security protection policy, the first identifier determined by the policy control function network element is the indication information #1.

### Manner 4

If the indication information #2 indicates that the security protection policy of the first service may be forcibly modified during connection establishment; or if the indication information #2 indicates that the security protection policy of the first service may be forcibly modified during connection establishment, and when the security protection policy of the first service is forcibly modified during connection establishment, all terminal devices that use the first service use a same security protection policy, the policy control function network element determines the first identifier based on the security protection policy configuration of the first service, and the first identifier is a new security protection policy.

For example, if a value of at least one of the plurality of security protection policies included in the security protection policy configuration of the first service is REQUIRED, a value of the new security protection policy is REQUIRED.

Specifically, if a value of a control plane security protection policy included in the at least one of the plurality of security protection policies is REQUIRED, a value of a control plane security protection policy included in the new security protection policy is REQUIRED; or if a value of a user plane security protection policy included in the at least one of the plurality of security protection policies is REQUIRED, a value of a user plane security protection policy included in the new security protection policy is REQUIRED.

More specifically, if a value of a control plane confidentiality protection policy included in the at least one of the plurality of security protection policies is REQUIRED, a value of a control plane confidentiality protection policy included in the new security protection policy is REQUIRED; if a value of a control plane integrity protection policy included in the at least one of the plurality of security protection policies is REQUIRED, a value of a control plane integrity protection policy included in the new security protection policy is REQUIRED; if a value of a user plane confidentiality protection policy included in the at least one of the plurality of security protection policies is REQUIRED, a value of a user plane confidentiality protection policy included in the new security protection policy is REQUIRED; or if a value of a user plane integrity protection policy included in the at least one of the plurality of security protection policies is REQUIRED, a value of a user plane integrity protection policy included in the new security protection policy is REQUIRED.

For example, if a value of any one of the plurality of security protection policies is not REQUIRED, a value of the new security protection policy is NOT NEEDED.

Specifically, if a value of a control plane security protection policy included in the any one of the plurality of security protection policies is not REQUIRED, a value of a control plane security protection policy included in the new security protection policy is NOT NEEDED; or if a value of a user plane security protection policy included in the any one of the plurality of security protection policies is not REQUIRED, a value of a user plane security protection policy included in the new security protection policy is NOT NEEDED.

More specifically, if a value of a control plane confidentiality protection policy included in the any one of the plurality of security protection policies is not REQUIRED, a value of a control plane confidentiality protection policy included in the new security protection policy is NOT NEEDED; if a value of a control plane integrity protection policy included in the any one of the plurality of security protection policies is not REQUIRED, a value of a control plane integrity protection policy included in the new security protection policy is NOT NEEDED; if a value of a user plane confidentiality protection policy included in the any one of the plurality of security protection policies is not REQUIRED, a value of a user plane confidentiality protection policy included in the new security protection policy is NOT NEEDED; or if a value of a user plane integrity protection policy included in the any one of the plurality of security protection policies is not REQUIRED, a value of a user plane integrity protection policy included in the new security protection policy is NOT NEEDED.

### Manner 5

If the indication information #2 indicates that the security protection policy of the first service may be forcibly modified during connection establishment; or if the indication information #2 indicates that the security protection policy of the first service may be forcibly modified during connection establishment, and when the security protection policy of the first service is forcibly modified during connection establishment, all terminal devices that use the first service use a same security protection policy, the policy control function network element determines the first identifier based on the security protection policy configuration of the first service, and the first identifier is a new security protection enabling manner.

For example, if a value of at least one of the plurality of security protection policies included in the security protection policy configuration of the first service is REQUIRED, the new security protection enabling manner is that security protection is enabled.

Specifically, if a value of a control plane security protection policy included in the at least one of the plurality of security protection policies is REQUIRED, a control plane security protection enabling manner included in the new security protection enabling manner is that security protection is enabled; or if a value of a user plane security protection policy included in the at least one of the plurality of security protection policies is REQUIRED, a user plane security protection enabling manner included in the new security protection enabling manner is that security protection is enabled.

More specifically, if a value of a control plane confidentiality protection policy included in the at least one of the plurality of security protection policies is REQUIRED, a control plane confidentiality protection enabling manner included in the new security protection enabling manner is that confidentiality protection is enabled; if a value of a control plane integrity protection policy included in the at least one of the plurality of security protection policies is REQUIRED, a control plane integrity protection enabling manner included in the new security protection enabling manner is that integrity protection is enabled; if a value of a user plane confidentiality protection policy included in the at least one of the plurality of security protection policies is REQUIRED, a user plane confidentiality protection enabling manner included in the new security protection enabling manner is that confidentiality protection is enabled; or if a value of a user plane integrity protection policy included in the at least one of the plurality of security protection policies is REQUIRED, a user plane integrity protection enabling manner included in the new security protection enabling manner is that integrity protection is enabled.

For example, if a value of any one of the plurality of security protection policies is not REQUIRED, the new security protection enabling manner is that security protection is disabled.

Specifically, if a value of a control plane security protection policy included in the any one of the plurality of security protection policies is REQUIRED, a control plane security protection enabling manner included in the new security protection enabling manner is that security protection is disabled; or if a value of a user plane security protection policy included in the any one of the plurality of security protection policies is REQUIRED, a user plane security protection enabling manner included in the new security protection enabling manner is that security protection is disabled.

More specifically, if a value of a control plane confidentiality protection policy included in the any one of the plurality of security protection policies is not REQUIRED, a control plane confidentiality protection enabling manner included in the new security protection enabling manner is that confidentiality protection is enabled; if a value of a control plane integrity protection policy included in the any one of the plurality of security protection policies is not REQUIRED, a control plane integrity protection enabling manner included in the new security protection enabling manner is that integrity protection is disabled; if a value of a user plane confidentiality protection policy included in the any one of the plurality of security protection policies is not REQUIRED, a user plane confidentiality protection enabling manner included in the new security protection enabling manner is that confidentiality protection is disabled; or if a value of a user plane integrity protection policy included in the any one of the plurality of security protection policies is not REQUIRED, a user plane integrity protection enabling manner included in the new security protection enabling manner is that integrity protection is disabled.

Optionally, in Manner 5, the first identifier determined by the policy control function network element indicates the security protection enabling manner used by the terminal device, and is not used to modify the security protection policy of the terminal device. Specifically, the security protection enabling manner that is used by the terminal device and that is indicated by the first identifier is the same as the foregoing new security protection enabling manner. Details are not described herein again.

Optionally, the policy control function network element may determine the first identifier based on the security protection policy configuration of the first service. In other words, even if the policy control function network element does not receive the indication information #2, the policy control function network element may determine the first identifier based on the security protection policy configuration of the first service. Specifically, when determining that the values of the plurality of security protection policy included in the security protection policy of the first service are different, the policy control function network element determines the first identifier based on the security protection policy configuration of the first service. For a manner in which the policy control function network element determines the first identifier based on the security protection policy configuration of the first service, refer to Manner 4 to Manner 5. For brevity, details are not described herein again.

Optionally, the policy control function network element may further receive the first identifier from a network exposure function network element or the unified data warehouse network element. In other words, the network exposure function network element or the unified data warehouse network element determines the first identifier, and then sends the first identifier to the policy control function network element. Specifically, a manner in which the network exposure function network element or the unified data warehouse network element determines the first identifier is the same as the manner in which the policy control function network element determines the first identifier. For brevity, details are not described herein again.

S450: The policy control function network element sends the first identifier. Correspondingly, in S450, the terminal device receives the first identifier.

For example, when sending the security protection policy configuration of the first service to the terminal device, the policy control function network element may send the first identifier to the terminal device. In other words, the policy control function network element may send a same piece of signaling including the security protection policy configuration of the first service and the first identifier to the terminal device.

In this embodiment of this application, after determining the first identifier based on the security protection policy configuration of the first service and the indication information #2, the policy control function network element sends the first identifier to the terminal device. This helps the terminal device modify the security protection policy based on the first identifier. This can avoid a connection establishment failure, of the first service, caused because security protection policies of terminal devices at two ends do not match.

FIG. 5 is a schematic flowchart of a communication method according to an embodiment of this application. As shown in FIG. 5, the method 500 may include S510 and S520. The following describes the steps in detail. It should be understood that, in FIG. 4, an example in which the core network element is a direct communication discovery name management function network element is used to describe the method for receiving the first identifier by the terminal device from the core network element.

S510: A direct communication discovery name management function network element #A (an example of a first core network element) obtains a first identifier.

The direct communication discovery name management function network element #A provides a service for a terminal device #A, and the terminal device #A is the first terminal device or the second terminal device in the method 300. For a description of the first identifier, refer to S440. For brevity, details are not described herein again.

For example, the direct communication discovery name management function network element #A obtains the first identifier in the following several manners:

### Manner 1

The direct communication discovery name management function network element #A receives a first identifier from a policy control function network element #A. The policy control function network element #A provides a service for the terminal device #A.

For example, the policy control function network element #A sends the first identifier to the direct communication discovery name management function network element #A by default. For example, when sending a security protection policy configuration of a first service to the direct communication discovery name management function network element #A, the policy control function network element #A sends the first identifier to the direct communication discovery name management function network element #A by default.

The first identifier is determined by the policy control function network element #A, or the first identifier is received by the policy control function network element #A from a network exposure function network element, or the first identifier is received by the policy control function network element #A from a unified data warehouse network element. Specifically, for a method in which the policy control function network element #A determines the first identifier, refer to S440. For brevity, details are not described herein again.

Optionally, the method 500 further includes: The direct communication discovery name management function network element #A sends a request message #2 to the policy control function network element #A, where the request message #2 is used to request to obtain the first identifier. Correspondingly, after receiving the request message #2, the policy control function network element #A sends the first identifier to the direct communication discovery name management function network element #A.

Optionally, after receiving the request message #2, the policy control function network element #A determines the first identifier based on the security protection policy configuration of the first service and indication information #2, and then sends the first identifier to the direct communication discovery name management function network element #A. For a description of the indication information #2, refer to S420. For brevity, details are not described herein again.

Optionally, after receiving the request message #2, the policy control function network element #A sends a request message #1 to an application function network element, where the request message #1 is used to request to obtain the indication information #2. Further, after receiving the indication information #2 from the application function network element, the policy control function network element #A determines the first identifier based on the security protection policy configuration of the first service and the indication information #2, and then sends the first identifier to the direct communication discovery name management function network element #A.

Optionally, when determining that values of a plurality of security protection policies included in the security protection policy configuration of the first service are different, the direct communication discovery name management function network element #A sends the request message #2 to the policy control function network element #A, to request to obtain the first identifier. The security protection policy configuration of the first service is obtained by the direct communication discovery name management function network element #A from the policy control function network element #A. Specifically, for meanings of the plurality of security protection policies and meanings of the different values of the plurality of security protection policies, refer to the foregoing descriptions in S410. For brevity, details are not described herein again.

### Manner 2

The direct communication discovery name management function network element #A determines a first identifier based on a security protection policy configuration of a first service and indication information #2.

The security protection policy configuration of the first service and the indication information #2 are obtained by the direct communication discovery name management function network element #A from a policy control function network element #A.

For example, the policy control function network element #A sends the indication information #2 to the direct communication discovery name management function network element #A by default. For example, when sending the security protection policy configuration of the first service to the direct communication discovery name management function network element #A, the policy control function network element #A sends the indication information #2 to the direct communication discovery name management function network element #A by default.

Optionally, the method 500 further includes: The direct communication discovery name management function network element #A sends a request message #1 to the policy control function network element #A, where the request message #1 is used to request to obtain the indication information #2. Correspondingly, after receiving the request message #1, the policy control function network element #A sends the indication information #2 to the direct communication discovery name management function network element #A.

Optionally, after receiving the request message #1, the policy control function network element #A sends the request message #1 to an application function network element, where the request message #1 is used to request to obtain the indication information #2. Further, after receiving the indication information #2 from the application function network element, the policy control function network element #A sends the indication information #2 to the direct communication discovery name management function network element #A.

Optionally, when determining that values of a plurality of security protection policies included in the security protection policy configuration of the first service are different, the direct communication discovery name management function network element #A sends the request message #1 to the policy control function network element #A, to request to obtain the indication information #2. The security protection policy configuration of the first service is obtained by the direct communication discovery name management function network element #A from the policy control function network element #A. Specifically, for meanings of the plurality of security protection policies and meanings of the different values of the plurality of security protection policies, refer to the foregoing descriptions in S410. For brevity, details are not described herein again.

After obtaining the indication information #2, the direct communication discovery name management function network element #A determines the first identifier based on the security protection policy configuration of the first service and the indication information #2. Specifically, for a manner in which the direct communication discovery name management function network element #A determines the first identifier, refer to Manner 1 to Manner 5 in S440. For brevity, details are not described herein again.

### Manner 3

The direct communication discovery name management function network element #A obtains a first identifier from a direct communication discovery name management function network element #B. The direct communication discovery name management function network element #B provides a service for a terminal device #B. The terminal device #B is the first terminal device or the second terminal device in the foregoing method 300, and the terminal device #B is different from the terminal device #A. For example, the terminal device #A is the first terminal device in the foregoing method 300, and the terminal device #B is the second terminal device in the foregoing method 300. For another example, the terminal device #A is the second terminal device in the foregoing method 300, and the terminal device #B is the first terminal device in the foregoing method 300.

Specifically, if the direct communication discovery name management function network element #A and the direct communication discovery name management function network element #B are not in a same PLMN, the direct communication discovery name management function network element #A may obtain the first identifier from the direct communication discovery name management function network element #B.

For example, when obtaining a service discovery parameter of a first service from the direct communication discovery name management function network element #B, the direct communication discovery name management function network element #A obtains the first identifier from the direct communication discovery name management network element. Specifically, the direct communication discovery name management function network element #A sends a request message #3 (an example of a second request message) to the direct communication discovery name management function network element. The request message #3 is used to request to obtain the service discovery parameter of the first service, or the request message #3 is used to request to obtain the service discovery parameter of the first service and the first identifier. Further, after receiving the request message #3, the direct communication discovery name management function network element #B sends a second message to the direct communication discovery name management function network element #A, where the second message includes the service discovery parameter of the first service and the first identifier.

For example, the service discovery parameter is service discovery code.

Optionally, there is a correspondence between the service discovery parameter sent by the direct communication discovery name management function network element #B and the first identifier. A form of the correspondence between the service discovery parameter and the first identifier may be that the first identifier is carried in the service discovery parameter, or may be a mapping relationship of [service discovery parameter, first identifier]. The correspondence between the service discovery parameter and the first identifier indicates that the service discovery parameter may be indexed based on the first identifier, and the first identifier may also be indexed based on the service discovery parameter.

Optionally, the request message #3 sent by the direct communication discovery name management function network element #A includes a security protection policy #A, where the security protection policy #A is a security protection policy used by the terminal device #A in the first service. Correspondingly, after receiving the request message #3, the directly connected service discovery name management function network element #B determines whether the security protection policy #A matches the security protection policy #B, where the security protection policy #B is a security protection policy used by the terminal device #B for the first service.

That the security protection policy #A matches the security protection policy #B may be: a value of the security protection policy #A is REQUIRED, and a value of the security protection policy #B is not NOT NEEDED; a value of the security protection policy #A is NOT NEEDED, and a value of the security protection policy #B is not REQUIRED; both values of the security protection policy #A and the security protection policy #B are PREFERRED; a value of the security protection policy #B is REQUIRED, and a value of the security protection policy #A is not NOT NEEDED; or a value of the security protection policy #B is NOT NEEDED, and a value of the security protection policy #A is not REQUIRED.

That the security protection policy #A does not match the security protection policy #B may be: a value of the security protection policy #A is NOT NEEDED, and a value of the security protection policy #B is REQUIRED; or a value of the security protection policy #A is REQUIRED, and a value of the security protection policy #B is NOT NEEDED.

If the security protection policy #A matches the security protection policy #B, the direct communication discovery name management function network element #B does not send the first identifier to the direct communication discovery name management network element #A, or the second message sent by the direct communication discovery name management function network element #B to the direct communication discovery name management function network element #A includes the first identifier and indication information #3 (an example of third indication information), or the second message includes the first identifier, the service discovery parameter, and the indication information #3. The indication information #3 indicates that the security protection policy #A matches the security protection policy #B.

If the security protection policy #A does not match the security protection policy #B, the second message sent by the direct communication discovery name management function network element #B to the direct communication discovery name management network element #A includes the first identifier, or the second message includes the first identifier and the service discovery parameter, or the second message includes the first identifier and the indication information #3, or the second message includes the first identifier, the service discovery parameter, and the indication information #3. The indication information #3 indicates that the security protection policy #A does not match the security protection policy #B.

The security protection policy #A is determined by the direct communication discovery name management function network element #A based on location information of the terminal device #A. In other words, the direct communication discovery name management function network element #A may determine the security protection policy #A from a security protection policy configuration of the first service based on the location information of the terminal device #A. For example, the location information of the terminal device #A is sent by the terminal device #A to the direct communication discovery name management function network element #A. For example, the terminal device #A sends a discovery request (discovery request) message including the location information to the direct communication discovery name management function network element #A, where the discovery request message is used to request to obtain the service discovery parameter. Alternatively, the location information of the terminal device #A is obtained by the direct communication discovery name management function network element #A by triggering a gateway mobile location center (gateway mobile location center, GMLC) to use a location service (location service, LCS). Alternatively, the location information of the terminal device #A is obtained by the direct communication discovery name management function network element #A from an access and mobility management function network element #A, where the access and mobility management function network element #A is a network element serving the terminal device #A.

Similarly, the direct communication discovery name management function network element #B may obtain location information of the terminal device #B from the terminal device #B. Alternatively, the direct communication discovery name management function network element #B triggers a GMLC to obtain the location information of the terminal device #B by using an LCS. Alternatively, the location information of the terminal device #B is obtained by the direct communication discovery name management function network element #B from an access and mobility management function network element #B, where the access and mobility management function network element #B is a network element serving the terminal device #B. Further, the direct communication discovery name management function network element #B may determine the security protection policy #B from a security protection policy configuration of the first service based on the location information of the terminal device #B.

Optionally, before S510, the method 500 further includes: The direct communication discovery name management function network element #A determines whether the security protection policy #A matches the security protection policy #B. If the security protection policy #A does not match the security protection policy #B, the direct communication discovery name management function network element #A obtains the first identifier in Manner 1 to Manner 3 in S510. If the security protection policy #A matches the security protection policy #B, the direct communication discovery name management function network element #A does not obtain the first identifier.

For example, the direct communication discovery name management function network element #A determines whether the security protection policy #A matches the security protection policy #B in the following two manners:

### Manner 1

The direct communication discovery name management function network element #A sends the security protection policy #A to the direct communication discovery name management function network element #B. The direct communication discovery name management function network element #A receives the indication information #3 sent by the direct communication discovery name management function network element #B, where the indication information #3 indicates whether the security protection policy #A matches the security protection policy #B. Further, the direct communication discovery name management function network element #A determines, based on the indication information #3, whether the security protection policy #A matches the security protection policy #B. If the indication information #3 indicates that the security protection policy #A matches the security protection policy #B, the direct communication discovery name management function network element #A determines that the security protection policy #A matches the security protection policy #B; or if the indication information #3 indicates that the security protection policy #A does not match the security protection policy #B, the direct communication discovery name management function network element #A determines that the security protection policy #A does not match the security protection policy #B.

Alternatively, when determining that the security protection policy #A matches the security protection policy #B, the direct communication discovery name management function network element #B does not send the indication information #3 to the direct communication discovery name management function network element #A; or when determining that the security protection policy #A does not match the security protection policy #B, the direct communication discovery name management function network element #B sends the indication information #3 to the direct communication discovery name management function network element #A, where the indication information #3 indicates that the security protection policy #A does not match the security protection policy #B. Further, after receiving the indication information #3, the direct communication discovery name management function network element #B determines that the security protection policy #A does not match the security protection policy #B.

### Manner 2

The direct communication discovery name management function network element #A receives the security protection policy #B from the direct communication discovery name management function network element #B. The direct communication discovery name management function network element #A determines whether the security protection policy #A matches the security protection policy #B.

S520: The direct communication discovery name management function network element #A sends the first identifier. Correspondingly, in S520, the terminal device #A receives the first identifier.

For example, the direct communication discovery name management function network element #A sends a direct communication discovery message including the first identifier to the terminal device #A.

Optionally, after obtaining the first identifier, the direct communication discovery name management function network element #A associates the first identifier with the service discovery parameter of the first service, and sends the first identifier and the service discovery parameter to the terminal device #A. It may be understood that after the direct communication discovery name management function network element #A associates the first identifier with the service discovery parameter, there is a correspondence between the first identifier and the service discovery parameter.

Optionally, before associating the first identifier with all service discovery parameters, the direct communication discovery name management function network element #A may also associate the first identifier with some service discovery parameters. This is not limited in embodiments of this application.

Optionally, before S520, the method 500 further includes: The direct communication discovery name management function network element #A determines whether the security protection policy #A matches the security protection policy #B. If the security protection policy #A does not match the security protection policy #B, the direct communication discovery name management function network element #A sends the first identifier to the terminal device #A. If the security protection policy #A matches the security protection policy #B, the direct communication discovery name management function network element #A does not send the first identifier to the terminal device #A.

In this embodiment of this application, after obtaining the first identifier, the direct communication discovery name management function network element sends the first identifier to the terminal device. This helps the terminal device modify the security protection policy based on the first identifier. This can avoid a connection establishment failure, of the first service, caused because security protection policies of terminal devices at two ends do not match.

The following describes a method for determining a security protection enabling manner provided in an embodiment of this application with reference to FIG. 6A, FIG. 6B, FIG. 7A and FIG. 7B.

It should be noted that, in the following embodiments, an example in which the first terminal device is A-UE, an example in which the second terminal device is M-UE, an example in which the first service is a ProSe service, and an example in which the connection of the first service is a PC5 unicast connection are used. In addition, in the following embodiments, an A-PCF and an A-5G DDNMF provide services for the A-UE, and an M-PCF and an M-5G DDNMF provide services for the M-UE.

FIG. 6A and FIG. 6B are a schematic flowchart of a method for determining a security protection enabling manner according to an embodiment of this application. As shown in FIG. 6A and FIG. 6B, the method 600 may include S601 to S609. The following describes the steps in detail.

S601: An AF determines that values of a plurality of PC5 unicast security protection policies included in a security protection policy configuration #1 of a ProSe service are different.

Specifically, the AF determines the security protection policy configuration #1 of the ProSe service based on an application requirement, where the security protection policy configuration #1 of the ProSe service includes the plurality of PC5 unicast security protection policies. The plurality of PC5 unicast security protection policies include control plane security protection policies and/or user plane security protection policies of PC5 unicast connections of the ProSe service at different geographical locations. It should be noted that the security protection policy includes a confidentiality protection policy and/or an integrity protection policy. For example, the control plane security protection policy includes a control plane confidentiality protection policy and/or a control plane integrity protection policy, and the user plane security protection policy includes a user plane confidentiality protection policy and/or a user plane integrity protection policy.

For more descriptions of the security protection policy configuration #1 of the ProSe service, refer to the foregoing descriptions of the security protection policy configuration #1 of the first service in S410. For more meanings of the different values of the plurality of PC5 unicast security protection policies, refer to the foregoing descriptions of the meanings of the different values of the plurality of security protection policies in S410.

Further, if the AF determines that the values of the plurality of PC5 unicast security protection policies included in the security protection policy configuration #1 of the ProSe service are different, the AF generates indication information #2. The indication information #2 indicates that the security protection policy of the ProSe service may be forcibly modified during PC5 unicast connection establishment. Alternatively, the indication information #2 indicates all terminal devices that use the ProSe service to use a same security protection policy.

Optionally, the AF may generate the indication information #2 by default. In other words, regardless of whether the values of the plurality of PC5 unicast security protection policies are the same, the AF generates the indication information #2. In addition, before generating the indication information #2, the AF may not determine whether the values of the plurality of PC5 unicast security protection policies are the same.

Optionally, after receiving a request message #1 from an A-PCF/M-PCF, the AF generates the indication information #2 based on the request message #1. The request message #1 is used to request the indication information #2. For example, the request message #1 is sent by the A-PCF/M-PCF to the AF by using an NEF. For another example, the request message #1 is directly sent by the A-PCF/M-PCF to the AF.

S602a: The AF sends the security protection policy configuration #1 of the ProSe service to the A-PCF.

The A-PCF determines a security protection policy configuration of the ProSe service based on the security protection policy configuration #1 of the ProSe service obtained from the AF, where the security protection policy configuration of the ProSe service includes the values of the plurality of PC5 unicast security protection policies.

S602b: The AF sends the security protection policy configuration #1 of the ProSe service to the M-PCF.

The M-PCF determines a security protection policy configuration of the ProSe service based on the security protection policy configuration #1 of the ProSe service obtained from the AF, where the security protection policy configuration of the ProSe service includes the values of the plurality of PC5 unicast security protection policies.

Optionally, when sending the security protection policy configuration #1 of the ProSe service to the A-PCF/M-PCF, the AF sends the indication information #2 to the A-PCF/M-PCF. In other words, the AF sends a same piece of signaling including the security protection policy configuration #1 of the ProSe service and the indication information #2 to the A-PCF/M-PCF.

Optionally, after receiving the request message #1, the AF sends the indication information #2 to the A-PCF/M-PCF.

Optionally, when determining that the values of the plurality of PC5 unicast security protection policies are different, the A-PCF/M-PCF sends the request message #1 to the AF.

S603: The A-PCF/M-PCF determines a first identifier.

Specifically, for a manner in which the A-PCF/M-PCF determines the first identifier, refer to the foregoing description in S440. For brevity, details are not described herein again.

S604a: The A-PCF sends the plurality of PC5 unicast security protection policies and the first identifier to the A-UE.

Specifically, the A-PCF may indicate an AMF to trigger a UE configuration update procedure (UE configuration update procedure) to send the plurality of PC5 unicast security protection policies and the first identifier to the A-UE. In other words, the A-PCF sends the plurality of PC5 unicast security protection policies and the first identifier to the AMF, and then the AMF sends the plurality of PC5 unicast security protection policies and the first identifier to the A-UE.

S604b: The M-PCF sends the plurality of PC5 unicast security protection policies and the first identifier to the M-UE.

Specifically, the M-PCF may indicate an AMF to trigger a UE configuration update procedure to send the plurality of PC5 unicast security protection policies and the first identifier to the M-UE. In other words, the M-PCF sends the plurality of PC5 unicast security protection policies and the first identifier to the AMF, and then the AMF sends the plurality of PC5 unicast security protection policies and the first identifier to the M-UE.

S605: The A-UE and the M-UE execute a discovery procedure of the ProSe service.

Specifically, the A-UE and the M-UE may perform a discovery procedure of a model A, or may perform a discovery procedure of a model B. This is not limited in embodiments of this application.

Optionally, the A-UE carries the first identifier in a message in the discovery procedure of the model A.

Optionally, the A-UE and/or the M-UE carry/carries the first identifier in a message in the discovery procedure of the model B.

S606: The M-UE sends a DCR/DSM complete message to the A-UE.

The DCR/DSM complete message includes a security protection policy #2, the security protection policy #2 is a security protection policy used by the M-UE in the PC5 unicast connection of the ProSe service, and the security protection policy #2 is determined by the M-UE from the plurality of PC5 unicast security protection policies based on a geographical location of the M-UE. The security protection policy #2 includes a control plane security protection policy #2 and/or a user plane security protection policy #2. The control plane security protection policy #2 includes a control plane confidentiality protection policy and/or a control plane integrity protection policy. The user plane security protection policy #2 includes a user plane confidentiality protection policy and/or a user plane integrity protection policy.

For example, the M-UE sends the DCR message to the A-UE, where the DCR message includes the control plane security protection policy #2.

For example, the M-UE sends the DCR message to the A-UE, where the DCR message includes the control plane security protection policy #2 and the user plane security protection policy #2.

For example, the M-UE sends the DSM complete message to the A-UE, where the DSM complete message includes the user plane security protection policy #2.

For example, the M-UE sends the DSM complete message to the A-UE, where the DSM complete message includes the control plane security protection policy #2 and the user plane security protection policy #2.

Optionally, the M-UE carries the first identifier in the DCR/DSM complete message.

S607: The A-UE determines a security protection enabling manner for the PC5 unicast connection based on the first identifier.

Specifically, for a method in which the A-UE determines the security protection enabling manner for the PC5 unicast connection, refer to the foregoing S320.

Optionally, when the DCR/DSM complete message includes the first identifier, the A-UE determines the security protection enabling manner for the PC5 unicast connection based on the first identifier.

Optionally, when the DCR/DSM complete message includes the first identifier, the A-UE may not check whether the security protection policy #2 matches the security protection policy of the local end, so that processing resources of the terminal device can be saved.

S608: The A-UE sends a DSM command/DCA message to the M-UE. The DSM command/DCA message includes a security protection enabling manner for the PC5 unicast connection.

The security protection enabling manner for the PC5 unicast connection includes a control plane security protection enabling manner and/or a user plane security protection enabling manner. The control plane security protection enabling manner includes a control plane confidentiality protection enabling manner and/or a control plane integrity protection enabling manner. The user plane security protection enabling manner includes a user plane confidentiality protection enabling manner and/or a user plane integrity protection enabling manner.

For example, if the A-UE receives the DCR message in S606, and the DCR message includes the control plane security protection policy #2, the A-UE determines the control plane security protection enabling manner for the PC5 unicast connection in S607. Further, in S608, the A-UE sends the DSM command message to the M-UE, where the DSM command message includes the control plane security protection enabling manner.

For example, if the M-UE sends the DCR message to the A-UE in S606, where the DCR message includes the control plane security protection policy #2 and the user plane security protection policy #2, the A-UE determines the control plane security protection enabling manner and the user plane security protection enabling manner for the PC5 unicast connection in S607. Further, in S608, the A-UE sends the DSM command message to the M-UE, where the DSM command message includes the control plane security protection enabling manner and the user plane security protection enabling manner.

For example, if the M-UE sends the DSM complete message to the A-UE in S606, where the DSM complete message includes the user plane security protection policy #2, the A-UE determines the user plane security protection enabling manner for the PC5 unicast connection in S607. Further, in S608, the A-UE sends the DCA message to the M-UE, where the DCA message includes the user plane security protection enabling manner.

For example, if the M-UE sends the DSM complete message to the A-UE in S606, where the DSM complete message includes the control plane security protection policy #2 and the user plane security protection policy #2, the A-UE determines the control plane security protection enabling manner and the user plane security protection enabling manner for the PC5 unicast connection in S607. Further, in S608, the A-UE sends the DCA message to the M-UE, where the DCA message includes the control plane security protection enabling manner and the user plane security protection enabling manner.

Optionally, the A-UE carries the first identifier in the DSM command/DCA message.

S609: The M-UE enables/disables security protection.

For example, if the M-UE receives the DSM command/DCA message, and the DSM command/DCA message includes the security protection enabling manner for the PC5 unicast connection, the M-UE determines, based on the security protection enabling manner of the PC5 unicast connection, to enable/disable security protection for the PC5 unicast connection. If the security protection enabling manner for the PC5 unicast connection is that security protection is enabled, the M-UE determines to enable security protection for the PC5 unicast connection; or if the security protection enabling manner for the PC5 unicast connection is that security protection is disabled, the M-UE determines not to enable security protection for the PC5 unicast connection.

Optionally, the M-UE does not check whether the security protection enabling manner matches the security protection policy #2.

Optionally, when the DSM command/DCA message includes the first identifier, the M-UE does not check whether the security protection enabling manner matches the security protection policy #2.

FIG. 7A and FIG. 7B are a schematic flowchart of a method for determining a security protection enabling manner according to an embodiment of this application. As shown in FIG. 7A and FIG. 7B, the method 700 may include S701 to S711. The following describes the steps in detail.

S701: An AF determines that values of a plurality of PC5 unicast security protection policies included in a security protection policy configuration #1 of a ProSe service are different.

This is the same as S601 in FIG. 6A and FIG. 6B. For brevity, details are not described herein again.

S702a: The AF sends the security protection policy configuration #1 of the ProSe service to the A-PCF.

The A-PCF determines a security protection policy configuration of the ProSe service based on the security protection policy configuration #1 of the ProSe service obtained from the AF, where the security protection policy configuration of the ProSe service includes the values of the plurality of PC5 unicast security protection policies.

S702b: The AF sends the security protection policy configuration #1 of the ProSe service to the M-PCF.

The M-PCF determines a security protection policy configuration of the ProSe service based on the security protection policy configuration #1 of the ProSe service obtained from the AF, where the security protection policy configuration of the ProSe service includes the values of the plurality of PC5 unicast security protection policies.

Optionally, when sending the security protection policy configuration #1 of the ProSe service to the A-PCF/M-PCF, the AF sends the indication information #2 to the A-PCF/M-PCF. In other words, the AF sends a same piece of signaling including the security protection policy configuration #1 of the ProSe service and the indication information #2 to the A-PCF/M-PCF.

Optionally, after receiving a request message #1, the AF sends the indication information #2 to the A-PCF/M-PCF.

Optionally, when determining that the values of the plurality of PC5 unicast security protection policies are different, the A-PCF/M-PCF sends the request message #1 to the AF.

Optionally, after receiving the request message #1 from the A-5G DDNMF, the A-PCF sends the request message #1 to the AF.

S703a: The A-PCF sends the plurality of PC5 unicast security protection policies to the A-UE.

Optionally, before the A-PCF sends the plurality of PC5 unicast security protection policies to the A-UE, the A-PCF may determine a first identifier. If the A-PCF determines the first identifier, the A-PCF sends the plurality of PC5 unicast security protection policies and the first identifier to the A-UE.

Specifically, for a manner in which the A-PCF determines the first identifier, refer to the foregoing description in S440. For brevity, details are not described herein again.

S703b: The M-PCF sends the plurality of PC5 unicast security protection policies to the M-UE.

Optionally, before the M-PCF sends the plurality of PC5 unicast security protection policies to the M-UE, the M-PCF may determine a first identifier. If the M-PCF determines the first identifier, the M-PCF sends the plurality of PC5 unicast security protection policies and the first identifier to the M-UE.

Specifically, for a manner in which the M-PCF determines the first identifier, refer to the foregoing description in S440. For brevity, details are not described herein again.

S704a: The A-UE sends a discovery request message to the A-5G DDNMF.

The discovery request message is used to request to obtain a service discovery parameter of the ProSe service. The discovery request message includes an application identifier of the ProSe service, to identify the ProSe service.

Optionally, the discovery request message includes location information of the A-UE.

S704b: The M-UE sends a discovery request message to the M-5G DDNMF.

The discovery request message is used to request to obtain a service discovery parameter of the ProSe service. The discovery request message includes an application identifier of the ProSe service, to identify the ProSe service.

Optionally, the discovery request message includes location information of the M-UE.

S705: The A-5G DDNMF/M-5G DDNMF obtains the first identifier.

Specifically, for a manner in which the A-5G DDNMF/M-5G DDNMF determines the first identifier, refer to the foregoing description in S510. For brevity, details are not described herein again.

It may be understood that, in S705, the A-5G DDNMF/M-5G DDNMF further determines the service discovery parameter, where the service discovery parameter includes ProSe code, and the ProSe code includes one or more of the following: ProSe application code (ProSe application code), ProSe discovery code (ProSe discovery code), ProSe query code (ProSe query code), or ProSe response code (ProSe response code).

Optionally, after the A-5G DDNMF/M-5G DDNMF obtains the first identifier, the A-5G DDNMF/M-5G DDNMF may associate the first identifier with the ProSe code. It may be understood that after the A-5G DDNMF/M-5G DDNMF associates the first identifier with the ProSe code, there is a correspondence between the first identifier and the ProSe code.

It should be noted that, if the A-5G DDNMF and the M-5G DDNMF are not in a same PLMN, the M-5G DDNMF requests to obtain the ProSe code from the A-5G DDNMF. Optionally, the M-5G DDNMF may further request to obtain the first identifier from the A-5G DDNMF.

If the A-5G DDNMF and the M-5G DDNMF are in a same PLMN, the M-5G DDNMF and the A-5G DDNMF are a same network element, and the M-5G DDNMF may locally obtain the ProSe code.

Optionally, the M-5G DDNMF may obtain the first identifier when determining that the security protection policy #1 does not match the security protection policy #2. The security protection policy #1 is a security protection policy used by the A-UE in the PC5 unicast connection of the ProSe service. The security protection policy #1 is determined by the A-5G DDNMF based on the location information of the A-UE. The location information of the A-UE may be received by the A-5G DDNMF from the A-UE; the location information of the A-UE is obtained by a GMLC by triggering the A-5G DDNMF to use an LCS; or the location information of the A-UE is obtained by the A-5G DDNMF from the A-AMF, where the A-AMF is a network element serving the A-UE. The A-5G DDNMF may directly obtain the location information of the A-UE from the A-AMF, or the A-PCF may obtain the location information of the A-UE from the A-AMF and send the location information to the A-5G DDNMF. The security protection policy #2 is a security protection policy used by the M-UE in the PC5 unicast connection of the ProSe service. The security protection policy #2 is determined by the M-5G DDNMF based on the location information of the M-UE. The location information of the M-UE may be received by the M-5G DDNMF from the M-UE; the location information of the M-UE is obtained by a GMLC by triggering the M-5G DDNMF to use an LCS; or the location information of the M-UE is obtained by the M-5G DDNMF from the M-AMF, where the M-AMF is a network element serving the M-UE. The M-5G DDNMF may directly obtain the location information of the M-UE from the M-AMF, or the M-PCF may obtain the location information of the M-UE from the M-AMF and send the location information to the M-5G DDNMF.

The M-5G DDNMF may determine that the security protection policy #1 does not match the security protection policy #2 in the following manners:

### Manner 1

The M-5G DDNMF sends a request message #3 to the A-5G DDNMF, where the request message #3 is used to request a service discovery parameter of the ProSe service, and the request message #3 includes the security protection policy #2. After determining that the security protection policy #1 does not match the security protection policy #2, the A-5G DDNMF sends the service discovery parameter and the first identifier to the M-5G DDNMF, or the A-5G DDNMF sends the service discovery parameter, the first identifier, and indication information #3 to the M-5G DDNMF, where the indication information #3 indicates that the security protection policy #1 does not match the security protection policy #2.

Optionally, there is a correspondence between ProSe code in the service discovery parameter and the first identifier.

### Manner 2

The M-5G DDNMF sends a request message #2 to the A-5G DDNMF, where the request message #2 is used to request a first identifier, and the request message #2 includes the security protection policy #2. After determining that the security protection policy #1 does not match the security protection policy #2, the A-5G DDNMF sends the first identifier to the M-5G DDNMF, or the A-5G DDNMF sends the first identifier and indication information #3 to the M-5G DDNMF, where the indication information #3 indicates that the security protection policy #1 does not match the security protection policy #2.

### Manner 3

The M-5G DDNMG sends the security protection policy #1 to the A-5G DDNMF. After determining that the security protection policy #1 does not match the security protection policy #2, the A-5G DDNMF sends indication information #3 to the M-5G DDNMG, where the indication information #3 indicates that the security protection policy #1 does not match the security protection policy #2.

After receiving the indication information #3, the M-5G DDNMF obtains the first identifier in Manner 1 and Manner 2 in S510.

### Manner 4

The A-5G DDNMG sends the security protection policy #1 to the M-5G DDNMF. After determining that the security protection policy #1 does not match the security protection policy #2, the M-5G DDNMF obtains the first identifier in Manner 1 to Manner 3 in S510.

S706a: The A-5G DDNMF sends a discovery response (discovery response) message to the A-UE.

The discovery response message includes the service discovery parameter and the first identifier. Optionally, there is a correspondence between ProSe code in the service discovery parameter and the first identifier.

S706b: The M-5G DDNMF sends a discovery response message to the M-UE.

The discovery response message includes the service discovery parameter. If the M-5G DDNMG obtains the first identifier, the discovery response message further includes the first identifier. Optionally, there is a correspondence between ProSe code in the service discovery parameter and the first identifier.

S707: The A-UE and the M-UE execute a discovery procedure of the ProSe service.

Specifically, the A-UE and the M-UE may perform a discovery procedure of a model A, or may perform a discovery procedure of a model B. This is not limited in embodiments of this application.

Optionally, if the A-UE receives, from the A-5G DDNMF, the ProSe code corresponding to the first identifier, and the A-UE allows forcible modification of the security protection policy, the A-UE carries the ProSe code corresponding to the first identifier in a discovery message in the discovery procedure. Correspondingly, if the M-UE receives the ProSe code corresponding to the first identifier, the M-UE determines that the A-UE allows forcible modification of the security protection policy.

Optionally, if the M-UE receives, from the M-5G DDNMF, the ProSe code corresponding to the first identifier, and the M-UE allows forcible modification of the security protection policy, the M-UE carries the ProSe code corresponding to the first identifier in a discovery message in the discovery procedure. Correspondingly, if the A-UE receives the ProSe code corresponding to the first identifier, the A-UE determines that the M-UE allows forcible modification of the security protection policy.

S708: The M-UE sends a DCR/DSM complete message to the A-UE.

This is the same as S606 in FIG. 6A and FIG. 6B. For brevity, details are not described herein again.

S709: The A-UE determines a security protection enabling manner for the PCS unicast connection based on the first identifier.

Specifically, for a method in which the A-UE determines the security protection enabling manner for the PCS unicast connection, refer to the foregoing S320.

Optionally, when the DCR/DSM complete message includes the first identifier, the A-UE determines the security protection enabling manner for the PCS unicast connection based on the first identifier.

Optionally, if the A-UE receives the ProSe code corresponding to the first identifier in the discovery procedure, the A-UE determines the security protection enabling manner of the PCS unicast connection based on the first identifier.

Optionally, when the DCR/DSM complete message includes the first identifier, the A-UE may not check whether the security protection policy #2 matches the security protection policy of the local end, so that processing resources of the terminal device can be saved.

S710: The A-UE sends a DSM command/DCA message to the M-UE. The DSM command/DCA message includes a security protection enabling manner for the PCS unicast connection.

This is the same as S608 in FIG. 6A and FIG. 6B. For brevity, details are not described herein again.

S711: The M-UE enables/disables security protection.

For example, if the M-UE receives the DSM command/DCA message, and the DSM command/DCA message includes the security protection enabling manner for the PCS unicast connection, the M-UE determines, based on the security protection enabling manner of the PCS unicast connection, to enable/disable security protection for the PCS unicast connection. If the security protection enabling manner for the PCS unicast connection is that security protection is enabled, the M-UE determines to enable security protection for the PCS unicast connection; or if the security protection enabling manner for the PCS unicast connection is that security protection is disabled, the M-UE determines not to enable security protection for the PCS unicast connection.

Optionally, the M-UE does not check whether the security protection enabling manner matches the security protection policy #2.

Optionally, when the DSM command/DCA message includes the first identifier, the M-UE does not check whether the security protection enabling manner matches the security protection policy #2, so that processing resources of the terminal device can be saved.

Optionally, if the M-UE receives the ProSe code corresponding to the first identifier in the discovery procedure, the M-UE does not check whether the security protection enabling manner matches the security protection policy #2, so that processing resources of the terminal device can be saved.

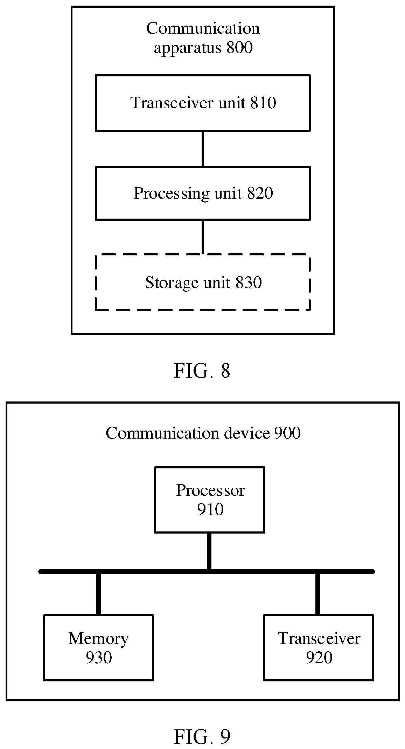

The methods provided in embodiments of this application are described above in detail with reference to FIG. 3 to FIG. 7A and FIG. 7B. The following describes in detail communication apparatuses provided in embodiments of this application with reference to FIG. 8 and FIG. 9. It should be understood that descriptions of apparatus embodiments correspond to the descriptions of the method embodiments. Therefore, for content that is not described in detail, refer to the foregoing method embodiments. For brevity, details are not described herein again.

In embodiments of this application, functional module division may be performed on the transmitting end device or the receiving end device based on the foregoing method example. For example, each functional module may be obtained through division corresponding to each function, or two or more functions may be integrated in one processing module. The integrated module may be implemented in a form of hardware, or may be implemented in a form of a software functional module. It should be noted that, in embodiments of this application, module division is an example, and is merely a logical function division. During actual implementation, another division manner may be used. An example in which each functional module is obtained through division based on each corresponding function is used below for description.

FIG. 8 is a schematic block diagram of a communication apparatus 800 according to an embodiment of this application. As shown in the figure, the communication apparatus 800 may include a transceiver unit 810 and a processing unit 820.

In a possible design, the communication apparatus 800 may be the first terminal device in the foregoing method embodiments, or may be a chip configured to implement a function of the first terminal device in the foregoing method embodiments.

It should be understood that the communication apparatus 800 may correspond to the first terminal device in the method 300 to the method 700 according to embodiments of this application. The communication apparatus 800 may include units configured to perform the steps performed by the first terminal device in the method 300 in FIG. 3, the method 200 in FIG. 4, the method 500 in FIG. 5, the method 600 in FIG. 6A and FIG. 6B, and the method 700 in FIG. 7A and FIG. 7B. In addition, the units in the communication apparatus 800 and the foregoing other operations and/or functions are used to implement corresponding procedures of the method 300 in FIG. 3, the method 200 in FIG. 4, the method 500 in FIG. 5, the method 600 in FIG. 6A and FIG. 6B, and the method 700 in FIG. 7A and FIG. 7B. It should be understood that a specific process in which the units perform the foregoing corresponding steps is described in detail in the foregoing method embodiments. For brevity, details are not described herein.

In another possible design, the communication apparatus 800 may be the second terminal device in the foregoing method embodiments, or may be a chip configured to implement a function of the second terminal device in the foregoing method embodiments.

It should be understood that the communication apparatus 800 may correspond to the second terminal device in the method 300 to the method 700 according to embodiments of this application. The communication apparatus 800 may include units configured to perform the steps performed by the second terminal device in the method 300 in FIG. 3, the method 200 in FIG. 4, the method 500 in FIG. 5, the method 600 in FIG. 6A and FIG. 6B, and the method 700 in FIG. 7A and FIG. 7B. In addition, the units in the communication apparatus 800 and the foregoing other operations and/or functions are used to implement corresponding procedures of the method 300 in FIG. 3, the method 200 in FIG. 4, the method 500 in FIG. 5, the method 600 in FIG. 6A and FIG. 6B, and the method 700 in FIG. 7A and FIG. 7B. It should be understood that a specific process in which the units perform the foregoing corresponding steps is described in detail in the foregoing method embodiments. For brevity, details are not described herein.

In another possible design, the communication apparatus 800 may be the policy control function network element in the foregoing method embodiments, or may be a chip configured to implement a function of the policy control function network element in the foregoing method embodiments.

It should be understood that the communication apparatus 800 may correspond to the policy control function network element in the method 400, the method 600, and the method 700 according to embodiments of this application. The communication apparatus 800 may include units configured to perform the method performed by the policy control function network element in the method 400 in FIG. 4, the method 600 in FIG. 6A and FIG. 6B, and the method 700 in FIG. 7A and FIG. 7B. In addition, the units in the communication apparatus 800 and the foregoing other operations and/or functions are used to implement corresponding procedures of the method 400 in FIG. 4, the method 600 in FIG. 6A and FIG. 6B, and the method 700 in FIG. 7A and FIG. 7B. It should be understood that a specific process in which the units perform the foregoing corresponding steps is described in detail in the foregoing method embodiments. For brevity, details are not described herein.

In another possible design, the communication apparatus 800 may be the direct communication discovery name management function network element in the foregoing method embodiments, or may be a chip configured to implement a function of the direct communication discovery name management function network element in the foregoing method embodiments.

It should be understood that the communication apparatus 800 may correspond to the direct communication discovery name management function network element in the method 500 to the method 700 according to embodiments of this application. The communication apparatus 800 may include units configured to perform the method performed by the direct communication discovery name management function network element in the method 500 in FIG. 5, the method 600 in FIG. 6A and FIG. 6B, and the method 700 in FIG. 7A and FIG. 7B. In addition, the units in the communication apparatus 800 and the foregoing other operations and/or functions are used to implement corresponding procedures of the method 500 in FIG. 5, the method 600 in FIG. 6A and FIG. 6B, and the method 700 in FIG. 7A and FIG. 7B. It should be understood that a specific process in which the units perform the foregoing corresponding steps is described in detail in the foregoing method embodiments. For brevity, details are not described herein.

In another possible design, the communication apparatus 800 may be the application function network element in the foregoing method embodiments, or may be a chip configured to implement a function of the application function network element in the foregoing method embodiments.

It should be understood that the communication apparatus 800 may correspond to the application function network element in the method 400, the method 600, and the method 700 according to embodiments of this application. The communication apparatus 800 may include units configured to perform the method performed by the application function network element in the method 400 in FIG. 4, the method 600 in FIG. 6A and FIG. 6B, and the method 700 in FIG. 7A and FIG. 7B. In addition, the units in the communication apparatus 800 and the foregoing other operations and/or functions are used to implement corresponding procedures of the method 400 in FIG. 4, the method 600 in FIG. 6A and FIG. 6B, and the method 700 in FIG. 7A and FIG. 7B. It should be understood that a specific process in which the units perform the foregoing corresponding steps is described in detail in the foregoing method embodiments. For brevity, details are not described herein.

It should be further understood that the transceiver unit 810 in the communication apparatus 800 may correspond to a transceiver 920 in a communication device 900 shown in FIG. 9, and the processing unit 820 in the communication apparatus 800 may correspond to a processor 910 in the communication device 900 shown in FIG. 9.

It should be further understood that when the communication apparatus 800 is a chip, the chip includes a transceiver unit and a processing unit. The transceiver unit may be an input/output circuit or a communication interface. The processing unit may be a processor, a microprocessor, or an integrated circuit that is integrated on the chip.

The transceiver unit 810 is configured to implement signal receiving and sending operations of the communication apparatus 800, and the processing unit 820 is configured to implement a signal processing operation of the communication apparatus 800.

Optionally, the communication apparatus 800 further includes a storage unit 830, and the storage unit 830 is configured to store instructions.

FIG. 9 is a schematic block diagram of a communication device 900 according to an embodiment of this application. As shown in the figure, the communication device 900 includes at least one processor 910 and a transceiver 920. The processor 910 is coupled to a memory, and is configured to execute instructions stored in the memory, to control the transceiver 920 to send a signal and/or receive a signal. Optionally, the communication device 900 further includes a memory 930, configured to store instructions.

It should be understood that the processor 910 and the memory 930 may be combined into one processing apparatus, and the processor 910 is configured to execute program code stored in the memory 930 to implement the foregoing functions. During specific implementation, the memory 930 may alternatively be integrated into the processor 910, or may be independent of the processor 910.

It should be further understood that the transceiver 920 may include a receiver (or referred to as a receiving machine) and a transmitter (or referred to as a transmitting machine). The transceiver 920 may further include an antenna. There may be one or more antennas. The transceiver 920 may be a communication interface or an interface circuit.

When the communication device 900 is a chip, the chip includes a transceiver unit and a processing unit. The transceiver unit may be an input/output circuit or a communication interface. The processing unit may be a processor, a microprocessor, or an integrated circuit that is integrated on the chip. An embodiment of this application further provides a processing apparatus, including a processor and an interface. The processor may be configured to perform the method in the foregoing method embodiments.

It should be understood that the processing apparatus may be a chip. For example, the processing apparatus may be a field programmable gate array (field programmable gate array, FPGA), an application-specific integrated chip (application-specific integrated circuit, ASIC), a system on chip (system on chip, SoC), a central processing unit (central processing unit, CPU), a network processor (network processor, NP), a digital signal processing circuit (digital signal processor, DSP), a microcontroller (micro controller unit, MCU), a programmable controller (programmable logic device, PLD), or another integrated chip.

In an implementation process, the steps in the foregoing methods can be implemented by using a hardware integrated logical circuit in the processor, or by using instructions in a form of software. The steps of the method disclosed with reference to embodiments of this application may be directly performed by a hardware processor, or may be performed by using a combination of hardware in the processor and a software module. A software module may be located in a mature storage medium in the art, such as a random access memory, a flash memory, a read-only memory, a programmable read-only memory, an electrically erasable programmable memory, or a register. The storage medium is located in the memory, and a processor reads information in the memory and completes the steps in the foregoing methods in combination with hardware of the processor. To avoid repetition, details are not described herein again.

It should be noted that, the processor in embodiments of this application may be an integrated circuit chip, and has a signal processing capability. In an implementation process, the steps in the foregoing method embodiments can be implemented by using a hardware integrated logical circuit in the processor, or by using instructions in a form of software. The processor may be a general-purpose processor, a digital signal processor (DSP), an application specific integrated circuit (ASIC), a field programmable gate array (FPGA) or another programmable logic device, a discrete gate or a transistor logic device, or a discrete hardware component. It may implement or perform the methods, the steps, and logical block diagrams that are disclosed in embodiments of this application. The general-purpose processor may be a microprocessor, or the processor may be any conventional processor or the like. The steps of the method disclosed with reference to embodiments of this application may be directly performed by a hardware decoding processor, or may be performed by using a combination of hardware in the decoding processor and a software module. A software module may be located in a mature storage medium in the art, such as a random access memory, a flash memory, a read-only memory, a programmable read-only memory, an electrically erasable programmable memory, or a register. The storage medium is located in the memory, and a processor reads information in the memory and completes the steps in the foregoing methods in combination with hardware of the processor.

It may be understood that the memory in embodiments of this application may be a volatile memory or a nonvolatile memory, or may include a volatile memory and a nonvolatile memory. The nonvolatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM), used as an external cache. Through example but not limitative description, many forms of RAMs may be used, for example, a static random access memory (static RAM, SRAM), a dynamic random access memory (dynamic RAM, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchronous link dynamic random access memory (synchlink DRAM, SLDRAM), and a direct rambus dynamic random access memory (direct rambus RAM, DR RAM). It should be noted that the memory of the systems and methods described in this specification includes but is not limited to these and any memory of another proper type.

According to the method provided in embodiments of this application, this application further provides a computer program product. The computer program product includes computer program code, and when the computer program code is run on a computer, the computer is enabled to perform the method according to any one of embodiments shown in FIG. 3 to FIG. 7A and FIG. 7B.

According to the method provided in embodiments of this application, this application further provides a computer-readable medium. The computer-readable medium stores program code. When the program code is run on a computer, the computer is enabled to perform the method in any one of embodiments shown in FIG. 3 to FIG. 7A and FIG. 7B.

According to the method provided in embodiments of this application, this application further provides a system. The system includes the first terminal device and the second terminal device.

According to the method provided in embodiments of this application, this application further provides a system. The system includes the first terminal device, the second terminal device, the policy control function network element, the direct communication discovery name management function network element, and the application function network element.

All or some of the foregoing embodiments may be implemented by using software, hardware, firmware, or any combination thereof. When software is used to implement embodiments, all or a part of embodiments may be implemented in a form of a computer program product. The computer program product includes one or more computer instructions. When the computer instructions are loaded and executed on the computer, the procedure or functions according to embodiments of this application are all or partially generated. The computer may be a general-purpose computer, a dedicated computer, a computer network, or other programmable apparatuses. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (digital subscriber line, DSL)) or wireless (for example, infrared, radio, or microwave) manner. The computer-readable storage medium may be any usable medium accessible by the computer, or a data storage device, for example, a server or a data center, integrating one or more usable media. The usable medium may be a magnetic medium (for example, a floppy disk, a hard disk drive, or a magnetic tape), an optical medium (for example, a digital video disc (digital video disc, DVD)), a semiconductor medium (for example, a solid-state drive (solid state disc, SSD)), or the like.

The network side device and the terminal device in the foregoing apparatus embodiments correspond to the network side device or the terminal device in the method embodiments. A corresponding module or unit performs a corresponding step. For example, a communication unit (a transceiver) performs a receiving step or a sending step in the method embodiments, and a step other than the sending step and the receiving step may be performed by a processing unit (a processor). For a function of a specific unit, refer to a corresponding method embodiment. There may be one or more processors.

Terminologies such as "component", "module", and "system" used in this specification are used to indicate computer-related entities, hardware, firmware, combinations of hardware and software, software, or software being executed. For example, a component may be, but is not limited to, a process that runs on a processor, a processor, an object, an executable file, an execution thread, a program, and/or a computer. As illustrated by using figures, both a computing device and an application that runs on the computing device may be components. One or more components may reside within a process and/or a thread of execution, and a component may be located on one computer and/or distributed between two or more computers. In addition, these components may be executed from various computer-readable media that store various data structures. For example, the components may communicate by using a local and/or remote process and based on, for example, a signal having one or more data packets (for example, data from two components interacting with another component in a local system, a distributed system, and/or across a network such as the internet interacting with other systems by using the signal).

A person of ordinary skill in the art may be aware that, in combination with the examples described in embodiments disclosed in this specification, units and algorithm steps may be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for a detailed working process of the foregoing system, apparatus, and unit, refer to a corresponding process in the foregoing method embodiments. Details are not described herein again.

In the several embodiments provided in this application, it should be understood that the disclosed system, apparatus and method may be implemented in other manners. For example, the described apparatus embodiment is merely an example. For example, division into the units is merely logical function division and may be other division during actual implementation. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. Some or all of the units may be selected based on actual requirements to achieve the objective of the solutions of embodiments.

In addition, functional units in embodiments of this application may be integrated into one processing unit, each of the units may exist alone physically, or two or more units are integrated into one unit.

When the functions are implemented in the form of a software functional unit and sold or used as an independent product, the functions may be stored in a computer-readable storage medium. Based on such an understanding, the technical solutions of this application essentially, or the part contributing to a conventional technology, or some of the technical solutions may be implemented in a form of a software product. The computer software product is stored in a storage medium, and includes several instructions for instructing a computer device (which may be a personal computer, a server, or a network device) to perform all or some of the steps of the methods described in embodiments of this application. The foregoing storage medium includes any medium that can store program code, such as a USB flash drive, a removable hard disk, a read-only memory (Read-Only Memory, ROM), a random access memory (Random Access Memory, RAM), a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A method for determining a security protection enabling manner, comprising:
receiving, by a first terminal device, a first identifier from a core network element, wherein the first identifier is used to modify a security protection policy of a terminal device;
in a process in which the first terminal device establishes a connection to a second terminal device for a service, determining, by the first terminal device based on the first identifier, whether to enable security protection for the connection; and
sending, by the first terminal device, first information to the second terminal device, wherein the first information indicates whether to enable security protection for the connection.

2. The method according to claim 1, wherein the first identifier is one or more of the following: a new security protection policy, a new security protection enabling manner, and first indication information, wherein the first indication information indicates that the security protection policy of the terminal device is allowed to be forcibly modified.

3. The method according to claim 1 or 2, wherein the first identifier is the first indication information, and the determining, by the first terminal device based on the first identifier, whether to enable security protection for the connection comprises:
determining, by the first terminal device based on the first indication information and according to a security protection policy with a higher security level in a first security protection policy and a second security protection policy, whether to enable security protection for the connection, wherein the first security protection policy is a security protection policy used by the first terminal device in the service, and the second security protection policy is a security protection policy used by the second terminal device in the service.

4. The method according to claim 1 or 2, wherein the first identifier is the first indication information, and the determining, by the first terminal device based on the first identifier, whether to enable security protection for the connection comprises:
determining, by the first terminal device based on the first indication information and according to a first security protection policy, whether to enable security protection for the connection, wherein the first security protection policy is a security protection policy used by the first terminal device in the service.

5. The method according to claim 1 or 2, wherein the first identifier is the new security protection policy, and the determining, by the first terminal device based on the first identifier, whether to enable security protection for the connection comprises:
determining, by the first terminal device according to the new security protection policy, whether to enable security protection for the connection.

6. The method according to claim 1 or 2, wherein the first identifier is the new security protection enabling manner, and the determining, by the first terminal device based on the first identifier, whether to enable security protection for the connection comprises:
determining, by the first terminal device based on the new security protection enabling manner, whether to enable security protection for the connection.

7. The method according to any one of claims 1 to 6, wherein the determining, by the first terminal device based on the first identifier, whether to enable security protection for the connection comprises:
when the first security protection policy does not match the second security protection policy, determining, by the first terminal device based on the first identifier, whether to enable security protection for the connection, wherein the first security protection policy is the security protection policy used by the first terminal device in the service, and the second security protection policy is the security protection policy used by the second terminal device in the service.

8. The method according to any one of claims 1 to 7, wherein the determining, by the first terminal device based on the first identifier, whether to enable security protection for the connection comprises:
when it is determined that the second terminal device supports forcible modification of the security protection policy, determining, by the first terminal device based on the first identifier, whether to enable security protection for the connection.

9. The method according to claim 8, wherein the method further comprises:
receiving, by the first terminal device, service discovery code from the second terminal device in a discovery procedure of the service, wherein the service discovery code corresponds to the first identifier; and
determining, by the first terminal device based on the service discovery code, that the second terminal device supports forcible modification of the security protection policy.

10. The method according to claim 8, wherein the method further comprises:
receiving, by the first terminal device, a first message from the second terminal device in a process of establishing the connection, wherein the first message comprises the first identifier; and
determining, by the first terminal device based on the first identifier, that the second terminal device supports forcible modification of the security protection policy.

11. The method according to any one of claims 1 to 10, wherein the core network element is a first direct communication discovery name management function network element, the first identifier corresponds to the service discovery code, and the method further comprises:
receiving, by the first terminal device, the service discovery code from the first direct communication discovery name management function network element.

12. A method for determining a security protection enabling manner, comprising:
receiving, by a second terminal device, a first identifier from a core network element, wherein the first identifier is used to modify a security protection policy of a terminal device;
in a process in which the second terminal device establishes a connection to a first terminal device for a service, sending, by the second terminal device, the first identifier to the first terminal device;
receiving, by the second terminal device, first information from the first terminal device, wherein the first information indicates whether to enable security protection for the connection, and the first information is determined by the first terminal device based on the first identifier; and
determining, by the second terminal device based on the first information, whether to enable security protection for the connection.

13. A method for determining a security protection enabling manner, comprising:
receiving, by a second terminal device, a first identifier from a core network element, wherein the first identifier is used to modify a security protection policy of a terminal device, and the first identifier corresponds to service discovery code;
sending, by the second terminal device, the service discovery code to a first terminal device in a discovery procedure of a service;
in a process in which the second terminal device establishes a connection to the first terminal device for the service, receiving, by the second terminal device, first information from the first terminal device, wherein the first information indicates whether to enable security protection for the connection, and the first information is determined by the first terminal device based on the first identifier; and
determining, by the second terminal device based on the first information, whether to enable security protection for the connection.

14. The method according to claim 12 or 13, wherein the first identifier is one or more of the following: a new security protection policy, a new security protection enabling manner, and first indication information, wherein the first indication information indicates that the security protection policy of the terminal device is allowed to be forcibly modified.

15. The method according to any one of claims 12 to 14, wherein the first information further comprises the first identifier.

16. A communication method, comprising:
determining, by a first core network element, a first identifier based on a security protection policy configuration of a first service and second indication information, wherein the second indication information indicates that a security protection policy of the first service is capable of being forcibly modified during connection establishment, and the first identifier is used to modify a security protection policy of a terminal device; and
sending, by the first core network element, the first identifier to the terminal device.

17. The method according to claim 16, wherein the determining, by a first core network element, a first identifier based on a security protection policy configuration of a first service and second indication information comprises:
when it is determined that values of a plurality of security protection policies comprised in the security protection policy configuration are different, determining, by the first core network element, the first identifier based on the security protection policy configuration and the second indication information, wherein the plurality of security protection policies comprise security protection policies of the first service at different geographical locations.

18. The method according to claim 16 or 17, wherein the method further comprises:
receiving, by the first core network element, the second indication information from a second core network element.

19. The method according to claim 18, wherein the method further comprises:
sending, by the first core network element, a first request message to the second core network element, wherein the first request message is used to request the second indication information.

20. The method according to claim 19, wherein the sending, by the first core network element, a first request message to the second core network element comprises:
when it is determined that the values of the plurality of security protection policies comprised in the security protection policy configuration are different, sending, by the first core network element, the first request message to the second core network element, wherein the plurality of security protection policies comprise the security protection policies of the first service at the different geographical locations.

21. The method according to any one of claims 18 to 20, wherein
the first core network element is a policy control function network element, and the second core network element is an application function network element; or
the first core network element is a direct communication discovery name management function network element, and the second core network element is a policy control function network element.

22. The method according to any one of claims 16 to 21, wherein the first core network element is a second direct communication discovery name management function network element, the terminal device is a second terminal device, and the sending, by the first core network element, the first identifier to the terminal device comprises:
when it is determined that a first security protection policy does not match a second security protection policy, sending, by the second direct communication discovery name management function network element, the first identifier to the second terminal device, wherein the first security protection policy is a security protection policy used by the first terminal device in the first service, the second security protection policy is a security protection policy used by the second terminal device in the first service, and the first terminal device is a terminal device that establishes a connection to the second terminal device for the first service.

23. The method according to claim 22, wherein the method further comprises:
receiving, by the second direct communication discovery name management network element, the first security protection policy from a first direct communication discovery name management network element; and
determining, by the second direct communication discovery name management network element, that the first security protection policy does not match the second security protection policy.

24. The method according to claim 22, wherein the method further comprises:
sending, by the second direct communication discovery name management network element, the second security protection policy to a first direct communication discovery name management network element; and
receiving, by the second direct communication discovery name management network element, third indication information from the first direct communication discovery name management network element, wherein the third indication information indicates that the first security protection policy does not match the second security protection policy.

25. The method according to any one of claims 22 to 24, wherein the method further comprises:
determining, by the second direct communication discovery name management function network element, the second security protection policy based on location information of the second terminal device.

26. The method according to claim 25, wherein the method further comprises:
receiving, by the second direct communication discovery name management function network element, the location information from the second terminal device.

27. The method according to claim 25, wherein the method further comprises:
triggering, by the second direct communication discovery name management function network element, a gateway mobile location center to obtain the location information by using a location service.

28. The method according to any one of claims 16 to 27, wherein the first core network element is the direct communication discovery name management function network element, and the first identifier is carried in a direct communication discovery message.

29. A communication method, comprising:
determining, by an application function network element, that values of a plurality of security protection policies comprised in a security protection policy configuration of a first service are different, wherein the plurality of security protection policies comprise security protection policies of the first service at different geographical locations; and
sending, by the application function network element, second indication information to a policy control function network element, wherein the second indication information indicates that the security protection policy of the first service is capable of being forcibly modified during connection establishment.

30. The method according to claim 29, wherein the method further comprises:
receiving, by the application function network element, a first request message from the policy control function network element, wherein the first request message is used to request the second indication information; and
the sending, by the application function network element, second indication information to a policy control function network element comprises:
sending, by the application function network element, the second indication information to the policy control function network element based on the first request message.

31. A communication apparatus, wherein the communication apparatus comprises a transceiver unit and a processing unit;
the transceiver unit is configured to receive a first identifier from a core network element, wherein the first identifier is used to modify a security protection policy of a terminal device;
in a process of establishing a connection to a second terminal device for a service, the processing unit is configured to determine, based on the first identifier, whether to enable security protection for the connection; and
the transceiver unit is further configured to send first information to the second terminal device, wherein the first information indicates whether to enable security protection for the connection.

32. A communication apparatus, wherein the communication apparatus comprises a transceiver unit and a processing unit;
the transceiver unit is configured to receive a first identifier from a core network element, wherein the first identifier is used to modify a security protection policy of a terminal device;
in a process of establishing a connection to a first terminal device for a service, the transceiver unit is further configured to send the first identifier to the first terminal device;
the transceiver unit is further configured to receive first information from the first terminal device, wherein the first information indicates whether to enable security protection for the connection, and the first information is determined by the first terminal device based on the first identifier; and
the processing unit is configured to determine, based on the first information, whether to enable security protection for the connection.

33. A communication apparatus, wherein the communication apparatus comprises a transceiver unit and a processing unit;
the transceiver unit is configured to receive a first identifier from a core network element, wherein the first identifier is used to modify a security protection policy of a terminal device, and the first identifier corresponds to service discovery code;
the transceiver unit is further configured to send the service discovery code to a first terminal device in a discovery procedure of a service;
in a process of establishing a connection to the first terminal device for the service, the transceiver unit is further configured to receive first information from the first terminal device, wherein the first information indicates whether to enable security protection for the connection, and the first information is determined by the first terminal device based on the first identifier; and
the processing unit is configured to determine, based on the first information, whether to enable security protection for the connection.

34. A communication apparatus, wherein the communication apparatus comprises a transceiver unit and a processing unit;
the processing unit is configured to determine a first identifier based on a security protection policy configuration of a first service and second indication information, wherein the second indication information indicates that a security protection policy of the first service is capable of being forcibly modified during connection establishment, and the first identifier is used to modify a security protection policy of a terminal device; and
the transceiver unit is configured to send the first identifier to the terminal device.

35. A communication apparatus, wherein the communication apparatus comprises a transceiver unit and a processing unit;
the processing unit is configured to determine that values of a plurality of security protection policies comprised in a security protection policy configuration of a first service are different, wherein the plurality of security protection policies comprise security protection policies of the first service at different geographical locations; and
the transceiver unit is configured to send second indication information to a policy control function network element, wherein the second indication information indicates that the security protection policy of the first service is capable of being forcibly modified during connection establishment.

36. A communication apparatus, wherein the communication apparatus comprises a transceiver unit and a processing unit;
the transceiver unit is configured to send a second request message to a first direct communication discovery name management network element, wherein the second request message is used to request to obtain a first identifier, and the first identifier is used to modify a security protection policy of a terminal device;
the transceiver unit is further configured to receive a second message from the first direct communication discovery name management network element, wherein the second message comprises the first identifier; and
the transceiver unit is further configured to send the first identifier to a second terminal device.

37. A communication apparatus, comprising a communication interface and at least one processor, wherein the communication interface and the at least one processor are interconnected through a line, and the communication interface is configured to perform operations of receiving and sending a message on the apparatus side in the method according to any one of claims 1 to 11; and
the at least one processor invokes instructions to perform a message processing or control operation performed by the apparatus in the method according to any one of claims 1 to 11.

38. A communication apparatus, comprising a communication interface and at least one processor, wherein the communication interface and the at least one processor are interconnected through a line, and the communication interface is configured to perform operations of receiving and sending a message on the apparatus side in the method according to claim 12; and
the at least one processor invokes instructions to perform a message processing or control operation performed by the apparatus in the method according to claim 12.

39. A communication apparatus, comprising a communication interface and at least one processor, wherein the communication interface and the at least one processor are interconnected through a line, and the communication interface is configured to perform operations of receiving and sending a message on the apparatus side in the method according to any one of claims 13 to 15; and
the at least one processor invokes instructions to perform a message processing or control operation performed by the apparatus in the method according to any one of claims 13 to 15.

40. A communication apparatus, comprising a communication interface and at least one processor, wherein the communication interface and the at least one processor are interconnected through a line, and the communication interface is configured to perform operations of receiving and sending a message on the apparatus side in the method according to any one of claims 16 to 28; and
the at least one processor invokes instructions to perform a message processing or control operation performed by the apparatus in the method according to any one of claims 16 to 28.

41. A communication apparatus, comprising a communication interface and at least one processor, wherein the communication interface and the at least one processor are interconnected through a line, and the communication interface is configured to perform operations of receiving and sending a message on the apparatus side in the method according to claim 29 or 30; and
the at least one processor invokes instructions to perform a message processing or control operation performed by the apparatus in the method according to claim 29 or 30.

42. The apparatus according to any one of claims 37 to 41, wherein the apparatus is a terminal device.

43. A chip system, wherein the chip system comprises at least one processor and an interface circuit, the interface circuit and the at least one processor are interconnected through a line, and the processor runs instructions to perform the method according to any one of claims 1 to 30.

44. A processor, configured to perform the method according to any one of claims 1 to 30.

45. A communication device, comprising:
a memory, wherein the memory is configured to store a computer program;
a transceiver, wherein the transceiver is configured to perform sending and receiving steps; and
a processor, wherein the processor is configured to invoke the computer program from the memory and run the computer program, to enable the communication device to perform the method according to any one of claims 1 to 30.

46. A computer-readable storage medium, wherein the computer-readable medium stores a computer program, and when the computer program runs on a computer, the computer performs the method according to any one of claims 1 to 30.

47. A computer program product comprising instructions, wherein when the computer program product runs on a computer, the computer is enabled to perform the method according to any one of claims 1 to 30.

48. A communication system, comprising the apparatus according to any one of claims 31 to 36.
